# EUROPÄISCHE PATENTSCHRIFT

(11) **EP 3 474 245 B1**
(45) Veröffentlichungstag und Bekanntmachung des Hinweises auf die Patenterteilung: **08.12.2021**
(21) Anmeldenummer: 17197701.0
(22) Anmeldetag: 23.10.2017
(51) Int. Cl.: G05B 19/418, G07F 7/06, B30B 9/32, A47B 47/00, B30B 9/30

(54) **KOMPAKTORANORDNUNG UND VERFAHREN ZUM BETREIBEN EINER KOMPAKTORANORDNUNG**
COMPACTOR ASSEMBLY AND METHOD FOR OPERATING THE SAME
SYSTÈME COMPACTEUR ET PROCÉDÉ DE FONCTIONNEMENT D'UN SYSTÈME COMPACTEUR

(43) Veröffentlichungstag der Anmeldung: 24.04.2019
(73) Patentinhaber: Wincor Nixdorf International GmbH, 33106 Paderborn (DE)
(72) Erfinder: HARTUNG, Domenic, 99094 Molsdorf (DE)

(56) Entgegenhaltungen:
- EP-A1- 1 415 937
- EP-A1- 2 249 320
- EP-A1- 2 521 104
- EP-A1- 3 208 214
- EP-A2- 0 255 027
- WO-A1-96/22238
- US-A1- 2016 288 996
- US-A1- 2017 140 600

## Beschreibung

Verschiedene Ausführungsbeispiele betreffen eine Kompaktoranordnung, eine Kompaktoreinrichtung, eine Funktionsmodulanordnung, und ein Verfahren zum Betreiben einer Kompaktoranordnung.

Im Allgemeinen werden zum Kompaktieren von Objekten verschiedene Konzepte verwendet, wobei die Objekte zerteilt, gepresst, und/oder auf eine andere Art umgeformt werden, um deren Platzbedarf zu verringern. Aufgrund des eingeführten Pfandsystems für Einweg- und Mehrwegbehälter (z.B. Flaschen, Dosen, Gläser, etc.) werden zunehmend automatisierte Rücknahmesysteme verwendet, um die Rücknahme großer Mengen an Behältern logistisch einfach zu gestalten. Mittels derartiger Rücknahmesysteme können die Behälter beispielsweise nach Art, Material, etc., sortieren werden. Ferner können verschiedene Optionen für die Rücknahme von Einzelbehältern oder Gebinden (z.B. einem Kasten, etc.) vorgesehen sein. In der Regel kann es erforderlich oder hilfreich sein, zumindest einige der zurückgenommenen Behälter zu zerkleinern, um einen effizienten Abtransport dieser zu ermöglichen. Dabei können beispielsweise nicht nur Einweg-Kunststoffbehälter, sondern auch Einweg-Glasbehälter, etc., kompaktiert werden. Mehrwegbehälter und Mehrweggebinde werden in der Regel separat gesammelt und abtransportiert ohne diese zu kompaktieren. In der Lebensmittelindustrie werden die leeren Behälter auch als Leergut bezeichnet und das Rücknahmesystem als Leergutrücknahmeanlage oder Leergutrücknahmeautomat.

EP 2 249 320 A1 beschreibt eine Vorrichtung zur Reinigung von Leergutrücknahmeautomaten und ein Verfahren dazu. Der Leergutrücknahmeautomat weist dabei eine Anzahl von Funktionsmodulen mit Baugruppen auf.

US 2017/0 140 600 A1 beschreibt ein modulares Rücknahmesystem für große Behälter, wie beispielsweise Propangastanks. Das Rücknahmesystem weist dabei ein Hauptmodul auf sowie mehrere damit verbundene Zusatzmodule.

WO 96/22238 A1 beschreibt eine Kompaktoranordnung gemäss dem Oberbegriff des Anspruchs 1 und ein Verfahren zum Betreiben einer Kompaktoranordnung gemäss dem Oberbegriff des Anspruchs 15.

Eine Kompaktoranordnung mit den Merkmalen des Anspruchs 1 und ein Verfahren zum Betreiben einer Kompaktoranordnung mit den Merkmalen des Anspruchs 15 lösen die Aufgabe der Erfindung.

Verschiedenen Ausführungsformen betreffen eine Kompaktoranordnung, beispielsweise in Verwendung in einer Leergutrücknahmeanlage oder einem Leergutrücknahmeautomaten. Gemäß verschiedenen Ausführungsformen kann die Kompaktoranordnung eine modulare Anordnung mehrerer Funktionsmodule aufweisen, welche den Betrieb der Kompaktoranordnung definieren.

Gemäß verschiedenen Ausführungsformen kann eine Kompaktoranordnung eine Funktionsmodulanordnung aufweisen, wobei diese Folgendes aufweist: eine Modulaufnahme zum Aufnehmen mehrerer Funktionsmodule, die mehreren Funktionsmodule, welche wahlweise in der Modulaufnahme aufgenommen werden können, wobei jedem Funktionsmodul der mehreren Funktionsmodule gemäß dessen Funktion eine Betriebsinformation zugeordnet ist; mindestens einen Prozessor (anschaulich eine Steuerung oder Regelung), welcher eingerichtet ist, mindestens eine Betriebsinformation von mindestens einem Funktionsmodul der mehreren Funktionsmodule zu ermitteln, wenn das mindestens eine Funktionsmodul in der Modulaufnahme aufgenommen ist, und
die Funktionsmodulanordnung basierend auf der ermittelten mindestens einen Betriebsinformation zu betreiben.

Gemäß verschiedenen Ausführungsformen kann eine Kompaktoranordnung eine Funktionsmodulanordnung aufweisen, wobei diese Folgendes aufweist: eine Modulaufnahme mit mehreren Aufnahmepositionen zum Aufnehmen von mehreren Funktionsmodulen, die mehreren Funktionsmodule, welche passend zu der Modulaufnahme ausgestaltet sind derart, dass die mehreren Funktionsmodule jeweils wahlweise in mehreren Konfigurationen in der Modulaufnahme aufgenommen werden können, mindestens einen Prozessor (anschaulich eine Steuerung oder Regelung), welcher eingerichtet ist, eine Ist-Konfigurationen (anschaulich eine tatsächlich vorliegende Konfiguration) der mehreren Konfigurationen zu ermitteln und die Funktionsmodulanordnung wahlweise in einem Betriebsmodus aus mehreren Betriebsmodi zu betreiben basierend auf der ermittelten Ist-Konfiguration.

Gemäß verschiedenen Ausführungsformen kann eine Funktionsmodulanordnung Folgendes aufweisen: eine Modulaufnahme, mehrere Funktionsmodule unterschiedlichen Funktionsmodul-Typs, welche derart eingerichtet sind, dass diese wahlweise in der Modulaufnahme aufgenommen werden können, mindestens einen Prozessor, welcher eingerichtet ist den Funktionsmodul-Typ mindestens eines in der Modulaufnahme aufgenommenen Funktionsmoduls zu ermitteln, und die Funktionsmodulanordnung wahlweise in einem Betriebsmodus aus mehreren Betriebsmodi zu betreiben basierend auf dem ermittelten Funktionsmodul-Typ.

Gemäß verschiedenen Ausführungsformen kann eine Kompaktoreinrichtung eine oder mehrere Kompaktoranordnungen aufweisen, wobei jede der Kompaktoranordnungen eine Funktionsmodulanordnung aufweist.

Gemäß verschiedenen Ausführungsformen kann ein Verfahren zum Betreiben einer Kompaktoranordnung Folgendes aufweisen: Transportieren von Leergut mittels einer Leergut-Transportvorrichtung in der Kompaktoranordnung, Konfigurieren einer Funktionsmodulanordnung, welche oberhalb der Leergut-Transportvorrichtung montiert ist, mittels Einbringens mehrerer Funktionsmodule in eine Modulaufnahme der Funktionsmodulanordnung; Ermitteln einer Ist-Konfiguration der Funktionsmodulanordnung basierend auf den mehreren Funktionsmodulen, die in der Modulaufnahme aufgenommen sind; und Betreiben der Funktionsmodulanordnung in einem Betriebsmodus, welcher der Ist-Konfiguration zugeordnet ist.

Ausführungsbeispiele sind in den Figuren dargestellt und werden im Folgenden näher erläutert.

Es zeigen
Fig.1A und Fig.1B einen Kompaktor in verschiedenen schematischen Darstellungen, gemäß verschiedenen Ausführungsformen;
Fig.2A und Fig.2B eine Kompaktoranordnung in verschiedenen schematischen Darstellungen, gemäß verschiedenen Ausführungsformen;
Fig.3A und Fig.3B jeweils eine Kompaktoreinrichtung in einer schematischen Darstellung, gemäß verschiedenen Ausführungsformen;
Fig.4A bis Fig.4F jeweils verschiedene Komponenten einer Kompaktoreinrichtung in einer schematischen Darstellung, gemäß verschiedenen Ausführungsformen;
Fig.5A bis Fig.5C jeweils mehrere Kompaktoranordnungen in verschiedenen schematischen Darstellungen, gemäß verschiedenen Ausführungsformen;
Fig.6 eine Kompaktoranordnung in einer schematischen Darstellung, gemäß verschiedenen Ausführungsformen;
Fig.7A bis Fig.7C eine Kompaktoranordnung in verschiedenen schematischen Darstellungen, gemäß verschiedenen Ausführungsformen;
Fig.8A bis Fig.8C mehrere Kompaktoranordnungen in verschiedenen schematischen Darstellungen, gemäß verschiedenen Ausführungsformen;
Fig.9A bis Fig.9C mehrere Kompaktoranordnungen in verschiedenen schematischen Darstellungen, gemäß verschiedenen Ausführungsformen;
Fig.lOA und Fig.10B eine Funktionsmodulanordnung in verschiedenen schematischen Darstellungen, gemäß verschiedenen Ausführungsformen;

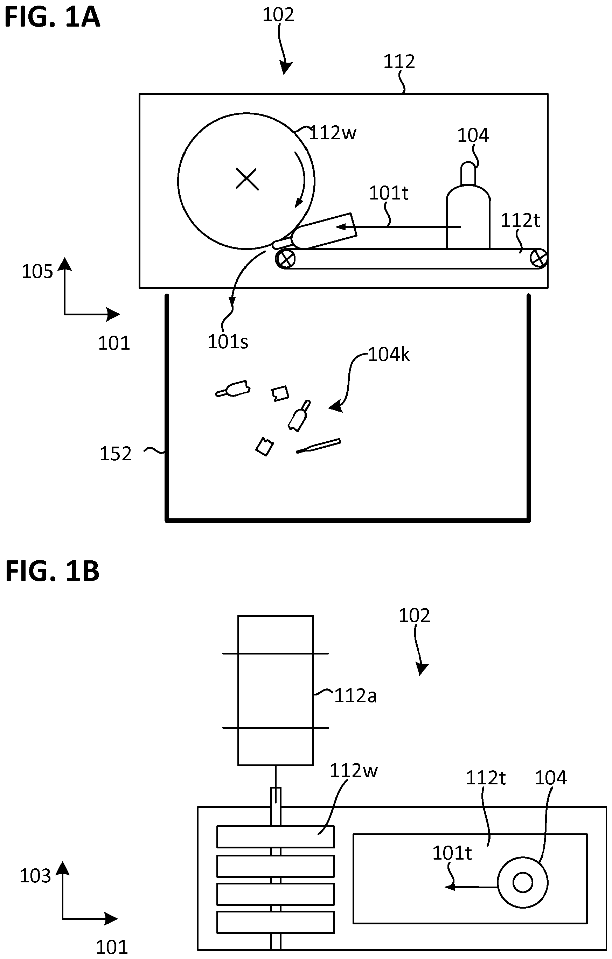

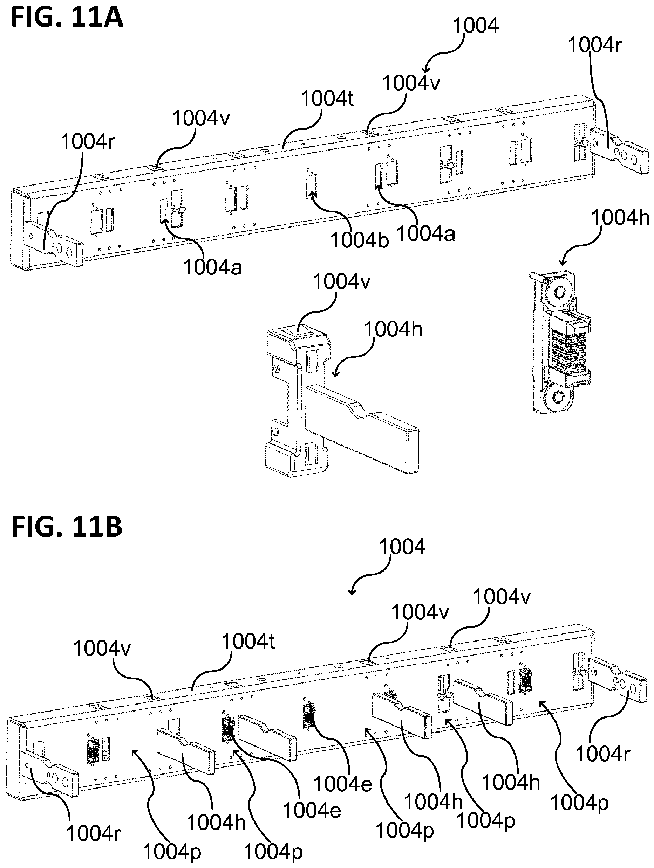

Fig.1 1A und Fig.11B eine Modulaufnahme einer Kompaktoranordnungen in verschiedenen schematischen Darstellungen, gemäß verschiedenen Ausführungsformen;

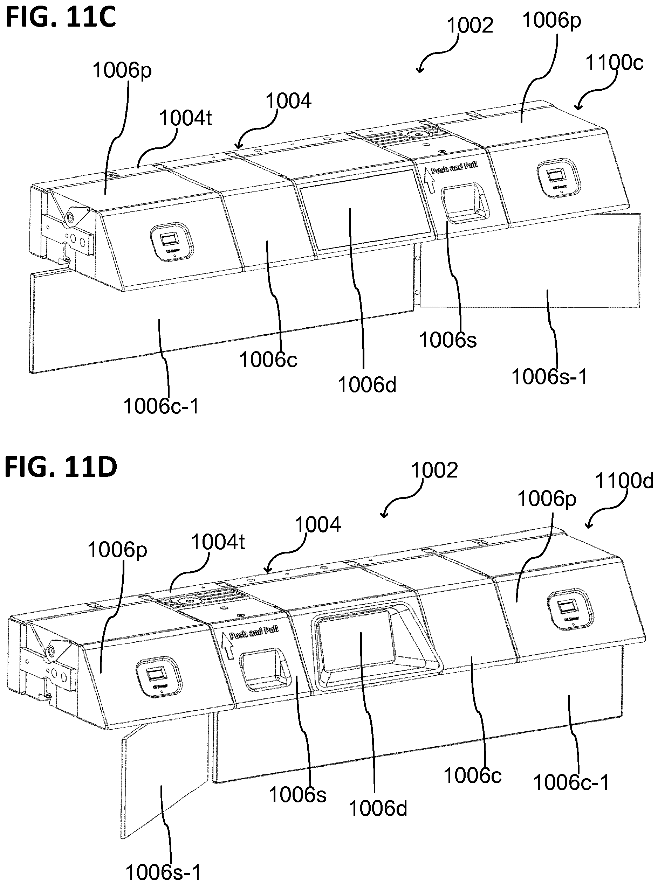

Fig.11C bis Fig.11F eine Kompaktoranordnungen in verschiedenen schematischen Darstellungen, gemäß verschiedenen Ausführungsformen; und

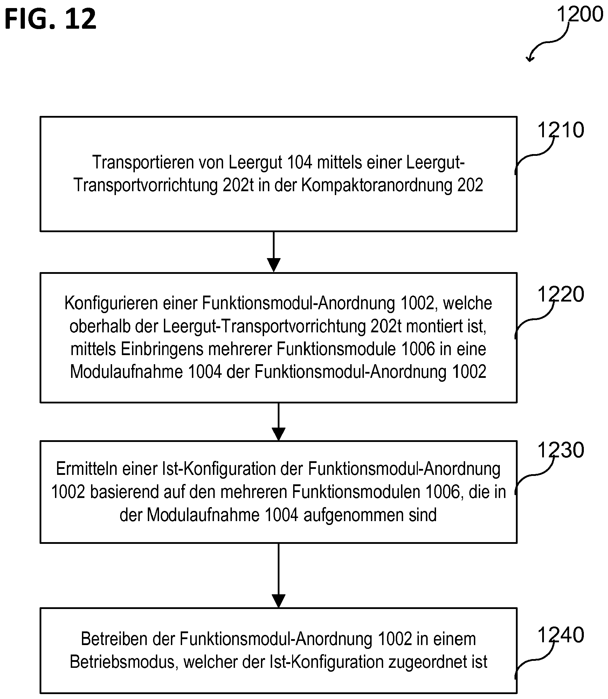

Fig.12 ein schematisches Ablaufdiagramm eines Verfahrens zum Betreiben einer Kompaktoranordnung, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen", "gekoppelt" sowie "gekuppelt" verwendet zum Beschreiben sowohl einer direkten als auch einer indirekten Verbindung, eines direkten oder indirekten Anschlusses, einer direkten oder indirekten Kopplung sowie einer direkten oder indirekten Kupplung. In den Figuren werden identische oder ähnliche Elemente mit identischen Bezugszeichen versehen, soweit dies zweckmäßig ist.

**Fig.1A** und **Fig.1B** veranschaulichen einen Kompaktor 102 gemäß verschiedenen Ausführungsformen in einer Seiten- oder Querschnittsansicht und in einer Draufsicht.

Ein Kompaktor 102 kann als funktionelle Baugruppe eines Leergutautomaten verwendet werden. Ein Leergutautomat wird auch als Leergutrücknahmeautomat (engl.: Reverse Vending Machine, RVS) bezeichnet. Typischerweise steht der Leergutautomat in Verbindung mit einem Pfandsystem, kann aber auch in anderen Einsatzgebieten Anwendung finden.

Um beispielsweise den Abtransport zurückgenommenen Leerguts 104 zu erleichtern, kann ein Kompaktor 102 eingerichtet sein, dieses Leergut 104 zu kompaktieren. Beispielsweise kann das Leergut 104, welches einem Leergutautomaten zugeführt wird, z.B. sofern es zum Kompaktieren geeignet ist, mittels eines Kompaktors 102 oder aufgeteilt mittels mehrerer Kompaktoren 102 kompaktiert werden. Anschaulich wird dabei der Platzbedarf des Leerguts 104 verringert. Dazu kann das Leergut 104 umgeformt, z.B. gepresst, zerkleinert, etc., werden. Anschaulich kann das Leergut 104 beispielsweise in eine Vielzahl von Stücke zerbrochen, zerschnitten, etc. werden. Alternativ oder zusätzlich dazu kann das Leergut 104 beispielsweise in eine flache Form gedrückt werden. Beispielsweise können Glasbehälter zerbrochen werden, z.B. mittels eines Glas-Crushers. Kunststoffbehälter können beispielsweise mittels eines Schneidwerks zerkleinert werden. Ferner können andere Umformverfahren Anwendung finden.

Kompaktiertes Leergut 104k kann in mindestens einem Sammelbehälter 152 (z.B. einem Frachtbehälter) gesammelt 101s werden. Der Sammelbehälter 152 kann dazu beispielsweise unter dem Kompaktor 102 angeordnet sein oder werden. Beispielsweise kann der Kompaktor 102 auf einem Gestell angeordnet sein, so dass unterhalb des Kompaktors 102 ein Raum zum Aufnehmen eines Sammelbehälters 152 oder mehrerer Sammelbehälter 152 bereitgestellt ist.

Leergut 104 kann in dem Zusammenhang beispielsweise als Behälter verstanden werden, z.B. in Form entleerter Verkaufsverpackungen, Verkaufsbehältern etc. Leergut 104 kann beispielsweise Folgendes aufweisen: Einwegflaschen, Einwegpfandflaschen, Getränkedosen, Mehrwegflaschen, etc. Ein Leergutautomat kann beispielsweise Teil einer Leergut-Rückführungskette sein, welche das Leergut 104 beispielsweise einer Wiederverwendung oder einer Verwertung (z.B. zur Rohstoff-Rückgewinnung) zuführt.

Der Kompaktor 102 kann ein Kompaktorwerk 112 (anschaulich eine Vorrichtung zum Verringern des Platzbedarfs) aufweisen, mittels dessen Leergut 104 kompaktiert werden kann. Das Kompaktorwerk 112 kann zumindest eine Kompaktorwalze 112w (z.B. eine Einzel-Kompaktorwalze oder mehrere gegenläufige Kompaktorwalzen) und einen Antrieb 112a (z.B. einen elektrischen Motor) zum Antreiben der Kompaktorwalze 112w aufweisen. Ferner kann der Kompaktor 102 eine Zuführvorrichtung 112t aufweisen zum Zuführen des Leerguts 104 in Richtung 101t der Kompaktorwalze 112w.

Die Zuführvorrichtung 112t kann beispielsweise eine angetriebene Transportvorrichtung sein. Alternativ oder zusätzlich dazu kann die Zuführvorrichtung 112t einen vordefinierten Pfad bereitstellen, auf dem das Leergut 104 beispielsweise aufgrund der Gravitationskraft bewegt wird. Anschaulich kann die Zuführvorrichtung 112t in diesem Fall eine Rutsche aufweisen. Alternativ dazu kann der Kompaktor 102 derart eingerichtet sein, dass das Leergut 104 in diesen hineinfallen kann, z.B. in freiem Fall.

Die Zuführvorrichtung 112t kann beispielsweise, als angetriebene Transportvorrichtung, einen Bandförderer, einen Gurtgliedförderer, einen Kettenförderer, einen Rollenförderer, etc. aufweisen. Ein Bandförderer kann beispielsweise mindestens ein Transportband aufweisen, auf welchem das Leergut 104 transportiert wird. Das mindestens eine Transportband kann beispielsweise mittels mehrerer Transportrollen (auch als Tragrollen bezeichnet) abgestützt sein oder werden. Das mindestens eine Transportband kann endlos umlaufend gelagert sein. Ein Gurtgliedförderer kann mindestens ein Gurtgliedband aufweisen. Das mindestens eine Gurtgliedband kann endlos umlaufend gelagert sein. Die einzelnen Gurtglieder eines Gurtgliedbands können mittels Verbindungselementen lösbar verbunden sein. Ein Rollenförderer kann beispielsweise eine Vielzahl von Transportrollen aufweisen, welche derart angeordnet sind, dass diese eine Transportfläche bereitstellen, auf welcher das Leergut 104 transportiert werden kann. Es können alternativ oder zusätzlich noch andere Förderertypen verwendet werden, welche zum Transport des Leerguts 104 geeignet sind.

Die Zuführvorrichtung 112t kann beispielsweise ein Schaufelrad aufweisen. Das Schaufelrad kann beispielsweise das Zuführen und/oder das Kompaktieren des Leerguts 104 unterstützen.

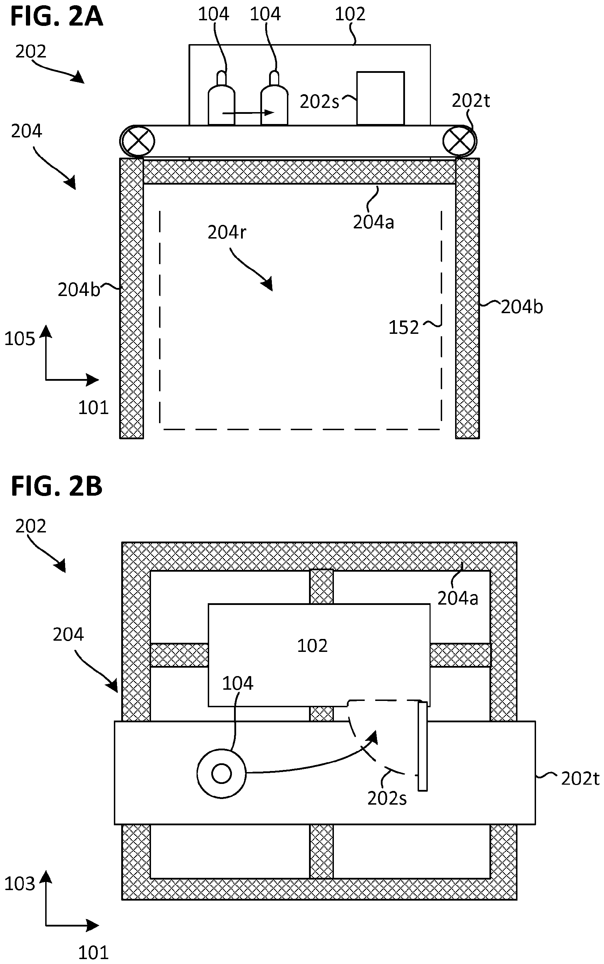

**Fig.2A** und **Fig.2B** veranschaulichen eine Kompaktoranordnung 202 gemäß verschiedenen Ausführungsformen in verschiedenen Ansichten. Die Kompaktoranordnung 202 kann beispielsweise eine Gestellanordnung 204 aufweisen. Ferner kann die Kompaktoranordnung 202 einen Kompaktor 102 oder mehrere Kompaktoren 102 aufweisen. Der Kompaktor 102 der Kompaktoranordnung 202 kann beispielsweise in ähnlicher oder gleicher Weise eingerichtet sein, wie vorangehend beschrieben ist und vice versa.

Die Kompaktoranordnung 202 kann zusätzlich zu dem Kompaktor 102 weitere Baugruppen aufweisen. Die weiteren Baugruppen können beispielsweise eingerichtet sein, den Betrieb des Kompaktors 102 zu unterstützen und/oder den Kompaktor 102 in die Ablaufkette eines Leergutautomaten einzubinden.

Die Gestellanordnung 204 kann beispielsweise mindestens ein Tragegestell 204a aufweisen. Der Kompaktor 102 kann beispielsweise an dem mindestens einen Tragegestell 204a befestig sein oder werden. Beispielsweise kann die Gestellanordnung 204 den Kompaktor 102 in einer Arbeitshöhe abstützen. Somit kann beispielsweise ein Sammelbehälter 152 (z.B. ein Container oder ein anderer Großraum-Behälter) unter dem Kompaktor 102 angeordnet sein oder werden.

Die Gestellanordnung 204 kann ferner mehrere Stützbeine 204b aufweisen. Die Stützbeine 204b können derart angeordnet sein, dass zwischen diesen ein erster Aufnahmeraum 204r zum Aufnehmen eines Sammelbehälters 152 bereitgestellt ist. Somit kann beispielsweise der Sammelbehälter 152 auf einfache Weise ausgetauscht werden kann.

Die Kompaktoranordnung 202 kann beispielsweise eine Leergut-Transportvorrichtung 202t aufweisen. Die Leergut-Transportvorrichtung 202t kann beispielsweise eingerichtet sein, das Leergut 104 zu dem Kompaktor 102 und/oder an diesem vorbei zu führen. Die Leergut-Transportvorrichtung 202t kann beispielsweise Teil einer Transportstrecke sein, entlang derer das Leergut 104 transportiert wird. Die Leergut-Transportvorrichtung 202t kann beispielsweise eine angetriebene Transportvorrichtung sein, beispielsweise aufweisend mindestens einen Bandförderer, mindestens einen Gurtgliedförderer, mindestens einen Kettenförderer, mindestens einen Rollenförderer, etc.

Die Kompaktoranordnung 202 kann beispielsweise eine Selektiervorrichtung 202s aufweisen. Die Selektiervorrichtung 202s kann auch als Sortiervorrichtung oder Teil einer Sortiervorrichtung verstanden werden. Somit kann Leergut 104, das entlang des Kompaktors 102 geführt wird, selektiert werden, z.B. zum selektiven Zuführen des Leerguts 104 in den Kompaktor 102. Dabei kann das Leergut 104 beispielsweise klassifiziert sein oder werden, z.B. kann eine erste Klasse "Kompaktieren" und eine zweite Klasse "Nicht-Kompaktieren" sein. Ferner können zusätzliche oder andere Klassen verwendet werden, z.B. kann das Leergut 104 nach Farbe, Material (z.B. Glas, Metall, Kunststoff, etc.), Zustand (z.B. Füllzustand, Integrität), etc. klassifiziert sein oder werden. Eine Kompaktoranordnung 202 kann beispielsweise Leergut 104, welches eine ihr zugeordnete Klasse aufweist (z.B. "Kompaktieren", z.B. "Glas einer ersten Farbe", "Glas einer zweiten Farbe", "Kunststoff einer ersten Farbe", "Kunststoff einer zweiten Farbe", etc.), selektieren.

Die Selektiervorrichtung 202s kann beispielsweise eingerichtet sein, aus einem Leergutstrom, welcher mittels der Leergut-Transportvorrichtung 202t an dem Kompaktor 102 entlanggeführt wird, das Leergut 104, welches eine der Kompaktoranordnung 202 zugeordnete Klasse aufweist, herauszuteilen und dem Kompaktor 102 zuzuführen.

Die Selektiervorrichtung 202s kann beispielsweise eingerichtet sein, das Klassifizieren des Leerguts 104 durchzuführen. Beispielsweise kann das Leergut 104 mittels der Selektiervorrichtung 202s und/oder einer geeigneten Sensoranordnung, die mit der Selektiervorrichtung 202s gekoppelt ist, klassifiziert werden, z.B. nach "kompaktierbar", "nicht-kompaktierbar", Behältertyp, Rückführungstyp, Material, Farbe, etc.

Beispielsweise kann das Selektieren des Leerguts 104 stufenweise erfolgen, z.B. kann als "kompaktierbar" klassifiziertes Leergut 104 weiter nach Farbe, Material, etc. unterklassifiziert werden.

Das Klassifizieren des Leerguts 104 bzw. ein Detektieren der Klasse des Leerguts 104 kann alternativ oder zusätzlich mittels einer separaten Klassifiziereinrichtung erfolgen. Diese kann beispielsweise am Eingang eines Leergutautomaten (siehe die nachfolgenden Figuren) angeordnet sein.

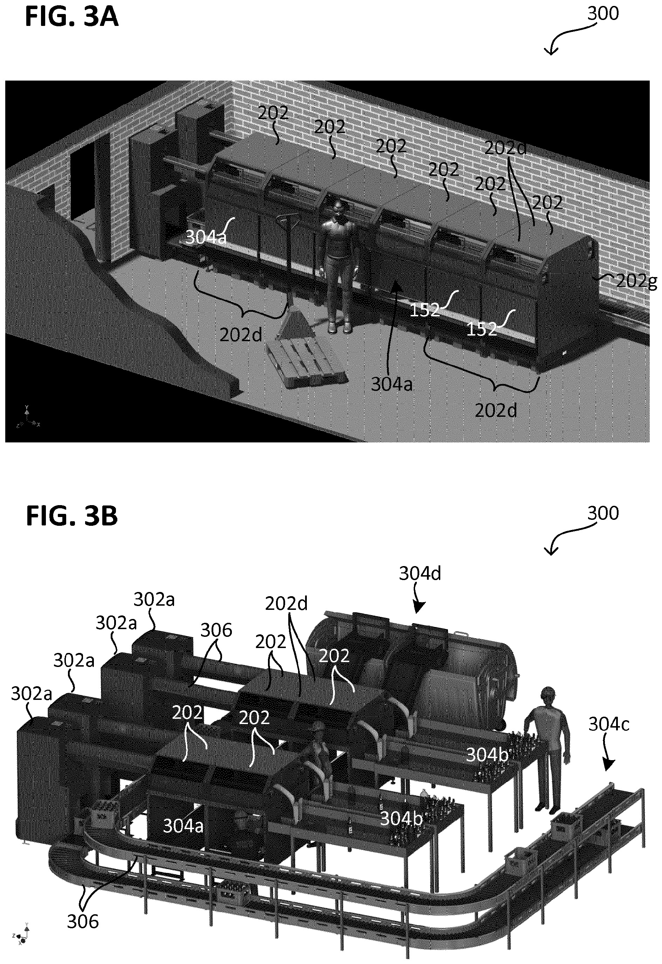

Die Kompaktoranordnung 202 kann ein Gehäuse aufweisen (siehe beispielsweise das Gehäuse 202g in Fig.3A). Der Kompaktor 102 und die Leergut-Transportvorrichtung 202t können beispielsweise zumindest teilweise in dem Gehäuse angeordnet sein. Das Gehäuse kann zumindest eine erste Öffnung aufweisen, durch welche hindurch der Kompaktoranordnung 202 das Leergut 104 zugeführt (z.B. mittels der Leergut-Transportvorrichtung 202t aufgenommen) werden kann, z.B. entlang der Transportstrecke.

Ferner kann das Gehäuse eine zweite Öffnung aufweisen. Durch die zweite Öffnung hindurch kann beispielsweise das nicht selektierte Leergut 104, welches an dem Kompaktor 102 vorbei transportiert wird, ausgegeben werden, z.B. entlang der Transportstrecke.

**Fig.3A** und **Fig.3B** veranschaulichen jeweils eine Kompaktoreinrichtung 300 (auch als Leergutrücknahmeanlage oder Leergutrücknahmeautomat bezeichnet) in einer schematischen Perspektivansicht, gemäß verschiedenen Ausführungsformen.

Die Kompaktoreinrichtung 300 kann beispielsweise eingerichtet sein, das Leergut 104 effizient zu sortieren, zu kompaktieren, etc. Dazu kann eine Ablaufkette für das Sortieren, Kompaktieren, etc. bereitgestellt sein oder werden in Verbindung mit mehreren Kompaktoranordnungen. Die Kompaktoranordnungen der Kompaktoreinrichtung 300 können beispielsweise eingerichtet sein, wie vorangehend mit Bezug auf die Kompaktoranordnung 202 beschrieben ist.

Die Ablaufkette der Kompaktoreinrichtung 300 kann an ihrem Anfang 302a beispielsweise eine Überprüfung des Leerguts 104 auf seine Rücknahmefähigkeit aufweisen. Beispielsweise können zur Überprüfung verschiedene Merkmale des Leerguts 104 (wie beispielsweise Leerguttyp, Gewicht, Gebindetyp, Barcode-Informationen, etc.) erfasst werden. Das als rücknahmefähig klassifizierte Leergut 104 kann dann von der Kompaktoreinrichtung 300 angenommen und der Ablaufkette zugeführt werden.

Beispielsweise können in der Ablaufkette mehrere Kompaktoranordnungen 202 in Serie (d.h. entlang einer gemeinsamen Transportstrecke) eingerichtet sein. Die mehreren Kompaktoranordnungen 202 können beispielsweise gemäß der Klassifizierung kompaktieren, z.B. wie vorangehend beschrieben ist.

Alternativ oder zusätzlich können die mehreren Kompaktoranordnungen 202 paarweise (z.B. zwei erste Kompaktoranordnungen und/oder zwei zweite Kompaktoranordnungen) ein Doppelmodul 202d bilden, dessen Kompaktoranordnungen 202 dieselbe Klasse (auch als Kategorie bezeichnet) kompaktieren. So kann beispielsweise eine Kompaktoranordnung 202 des Doppelmoduls 202d gewartet werden, während die andere Kompaktoranordnung 202 des Doppelmoduls 202d den Betrieb aufrechterhält. Mehrere Doppelmodule 202d können in Serie (z.B. "Rücken-an-Rücken") oder parallel zueinander (d.h. in verschiedenen Transportstrecken) angeordnet sein. Das Doppelmodul 202d kann beispielsweise zwei Kompaktoren 102 aufweisen. Diese können in einem gemeinsamen Gehäuse 202g oder in separaten Gehäusen 202g angeordnet sein.

Die Ablaufkette kann an einem Ende einen Aufnahmeraum 304a (z.B. mit einem Sammelbehälter 152 darin) aufweisen zum Aufnehmen von kompaktiertem Leergut 104k. Die Ablaufkette kann (zusätzlich dazu oder alternativ dazu) an einem weiteren Ende zumindest einen weiteren Aufnahmeraum 304b aufweisen, z.B. für Einzel-Leergut (z.B. Mehrweg-Leergut oder Glasflaschen), welches nicht kompaktiert werden soll. Ferner kann die Ablaufkette (zusätzlich dazu oder alternativ dazu) an einem weiteren Ende einen weiteren Aufnahmeraum 304c aufweisen, z.B. für Leergut-Kisten. Ferner kann die Ablaufkette (zusätzlich dazu oder alternativ dazu) an einem weiteren Ende einen weiteren Aufnahmeraum 304d aufweisen, z.B. für nicht verwertbares Leergut 104 (z.B. zu entsorgendes Leergut).

Ein Ende oder mehrere Enden der Ablaufkette können beispielsweise mittels eines Transportsystems verbunden sein. Das Transportsystem kann beispielsweise mehrere Transportstrecken 306 aufweisen und/oder an den Stellen, an denen es sich verzweigt (d.h. zwei Transportstrecken aneinandergrenzen), kann eine Selektion erfolgen.

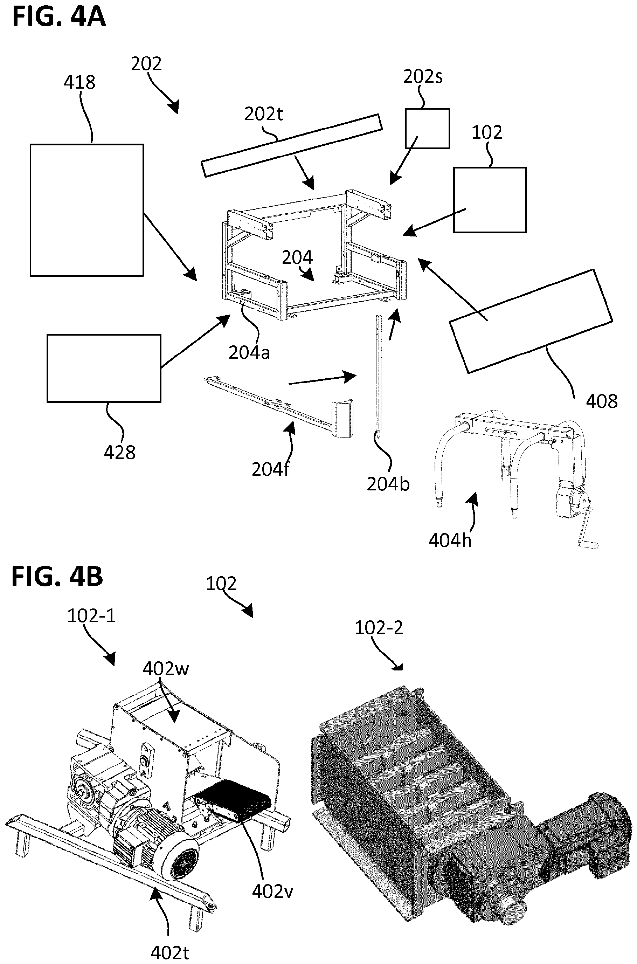

**Fig.4A** veranschaulicht verschiedene Komponenten einer Kompaktoranordnung 202, gemäß verschiedenen Ausführungsformen. Die Kompaktoranordnung 202 kann in ähnlicher oder gleicher Weise ausgestaltet sein, wie vorangehend beschrieben ist und vice versa.

Die Kompaktoranordnung 202 kann beispielsweise mindestens einen Kompaktor 102 aufweisen, der in ähnlicher oder gleicher Weise ausgestaltet sein kann, wie vorangehend beschrieben ist und vice versa.

Die Kompaktoranordnung 202 kann beispielsweise mindestens eine Gestellanordnung 204 aufweisen, die in ähnlicher oder gleicher Weise ausgestaltet sein kann, wie vorangehend beschrieben ist und vice versa. Die Gestellanordnung 204 kann beispielsweise ein Tragegestell 204a aufweisen, welches anschaulich als zentrales Element dient zum Montieren der Komponenten der Kompaktoranordnung 202 und/oder zum Aufstellen der Kompaktoranordnung 202. Die Gestellanordnung 204 kann ferner beispielsweise Stützbeine 204b aufweisen, mittels derer das Tragegestell 204a abgestützt werden kann. Ferner kann die Gestellanordnung 204 beispielsweise eine Fußbaugruppe 204f aufweisen. Die Fußbaugruppe 204f kann einen Rammschutz und/oder einen Bodenanker aufweisen. Der Rammschutz selbst kann beispielsweise austauschbar eingerichtet sein, da dieser bei einer Beschädigung gewechselt werden sollte. Der Bodenanker kann beispielsweise mit mindestens einer Bohrung versehen sein, die zur Befestigung am Boden verwendet werden kann.

Die Gestellanordnung 204 kann derart eingerichtet sein, dass das Tragegestell 204a mittels eines Hubwagens transportiert werden kann, auf dem Boden abgestellt werden kann, und mittels der Stützbeine 204b auf eine gewünschte Höhe angehoben werden kann. Zum Anheben des Tragegestells 204a kann eine Hubvorrichtung 404h verwendet werden. Es können auch mehrere Tragegestelle 204a miteinander verbunden sein oder werden und gleichzeitig angehoben werden. Beim Anheben des Tragegestells 204a können einige oder alle weiteren Komponenten der Kompaktoranordnung 202 bereits an dem Tragegestell 204a montiert sein. Ferner kann das Tragegestell
204a auch wieder abgesenkt werden. Das Tragegestell 204a kann derart eingerichtet sein, dass einige oder alle weiteren Komponenten der Kompaktoranordnung 202, die an dem Tragegestell 204a montiert sind (z.B. der Kompaktor 102), demontiert bzw. ausgetauscht werden können, ohne das Tragegestell 204a abzusenken.

**Fig.4B** veranschaulicht beispielhaft einen Kompaktor 102 in zwei verschiedenen Ausgestaltungen 102-1, 102-2. Der Kompaktor 102 kann beispielsweise in ähnlicher oder gleicher Weise eingerichtet sein, wie vorangehend beschrieben ist und vice versa.

Der Kompaktor 102 kann beispielsweise in einer ersten Ausgestaltung 102-1 ein Schneidwerk 402w aufweisen, z.B. zum Zerkleinern von Leergut 104 aus Kunststoff. Mittels einer Vorbandbaugruppe 402v kann beispielsweise das Leergut 104 in Richtung des Schneidwerks 402w geführt werden. Ferner kann der Kompaktor 102 in einer zweiten Ausgestaltung 102-2 einen Glas-Crusher aufweisen, z.B. zum Zerkleinern von Leergut 104 aus Glas.

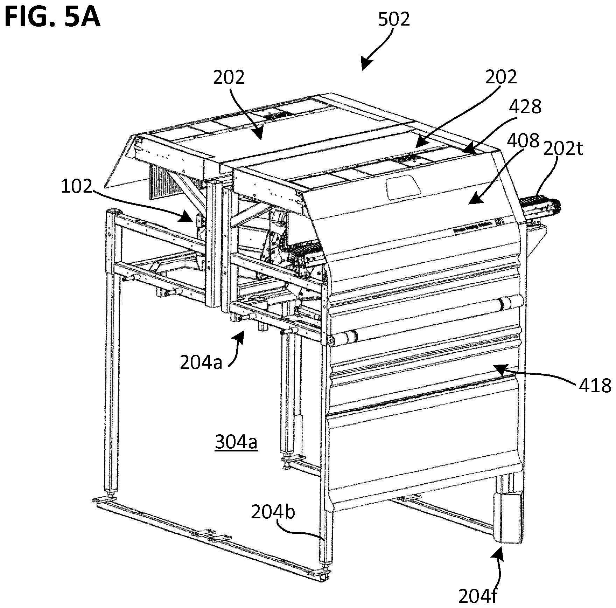

Der Kompaktor 102 kann beispielsweise auf einem Tragrahmen 402t montiert sein oder werden. Der Tragrahmen 402t kann beispielsweise passend zu dem Tragegestell 204a der Gestellanordnung 204 ausgestaltet sein (oder anschaulich als Teil der Gestellanordnung 204 verstanden werden) zum Montieren des Kompaktors 102 an dem Tragegestell 204a (siehe beispielsweise Fig.5A bis FIG.5C). Beispielsweise kann der Kompaktor 102 mittels des Tragrahmens 402t von unten in das Tragegestell 204a hineingehoben werden und an diesem lösbar befestigt werden. Ferner kann der Tragrahmen 402t von dem Tragegestell 204a gelöst werden und der Kompaktor 102 kann mittels des Tragrahmens 402t nach unten aus dem Tragegestell 204a heraus abgesenkt werden. Zum Anheben und/oder Absenken des Kompaktors 102 kann beispielsweise die Hubvorrichtung 404h verwendet werden.

Die Kompaktoranordnung 202 kann beispielsweise mindestens eine Leergut-Transportvorrichtung 202t aufweisen, die in ähnlicher oder gleicher Weise ausgestaltet sein kann, wie vorangehend beschrieben ist und vice versa.

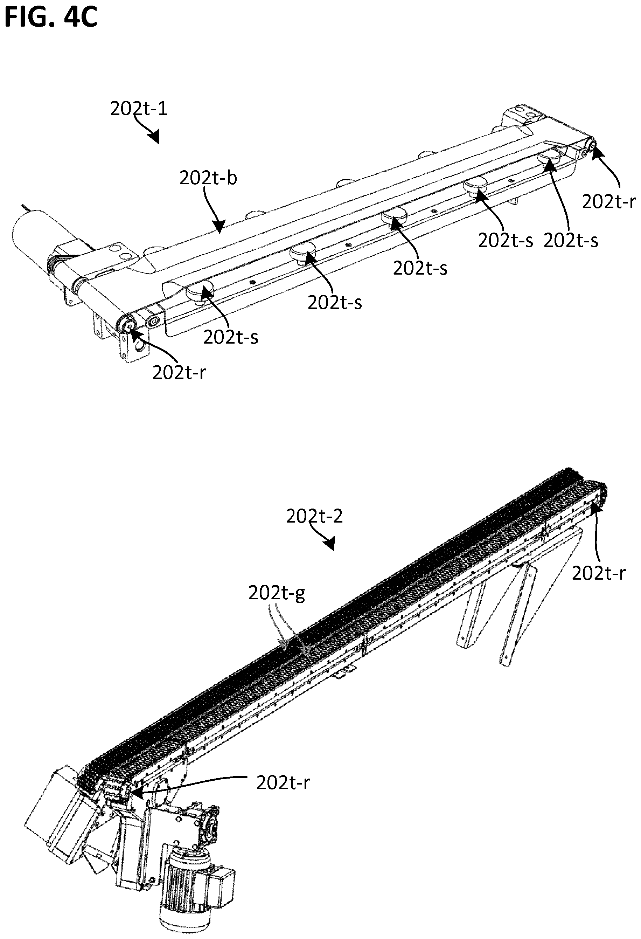

**Fig.4C** veranschaulicht beispielhaft eine Leergut-Transportvorrichtung 202t in zwei verschiedenen Ausgestaltungen 202t-1, 202t-2. Die Leergut-Transportvorrichtung 202t kann beispielsweise in ähnlicher oder gleicher Weise eingerichtet sein, wie vorangehend beschrieben ist und vice versa.

Die Leergut-Transportvorrichtung 202t kann in einer ersten Ausgestaltung 202t-1 ein Transportband 202t-b aufweisen. Anschaulich kann die Leergut-Transportvorrichtung 202t als Bandförderer 202t-1 ausgestaltet sein. Das Transportband 202t-b kann zwischen mindestens zwei Bandrollen 202t-r endlos umlaufend gelagert sein. Mittels der Bandrollen 202t-r kann das Transportband 202t-b entsprechend gespannt werden. Ferner können Abstützanordnungen 202t-s zum Bombieren des Transportbands 202t-b verwendet werden. Die jeweilige Abstützanordnung 202t-s kann beispielsweise eine Tragrolle und ein Drehlager aufweisen, wobei die Tragrolle mittels des Drehlagers um eine Drehachse drehbar gelagert ist. Dabei kann die Tragrolle eine Mantelfläche aufweisen, auf welcher das Transportband zumindest teilweise aufliegt. Die Mantelfläche kann beispielsweise schräg zu der Drehachse ausgerichtet sein.

Die Leergut-Transportvorrichtung 202t kann in einer zweiten Ausgestaltung 202t-2 beispielsweise zwei Gurtgliedbänder 202t-g aufweisen. Anschaulich kann die Leergut-Transportvorrichtung 202t als Gurtgliedförderer 202t-2 ausgestaltet sein. Die Gurtgliedbänder 202t-g können V-förmig angeordnet sein. Das jeweilige Gurtgliedband 202t-g kann zwischen mindestens zwei Bandrollen 202t-r endlos umlaufend gelagert sein. Das jeweilige Gurtgliedband 202t-g kann eine Vielzahl von Gurtgliedern aufweisen, die mechanisch (z.B. mittels Bolzen) miteinander verbunden sind. Dabei kann die nach außen frei liegende Seite des Gurtgliedbands 202t-g (anschaulich die Seite, die in Kontakt mit dem Leergut 104 kommen kann) gummiert sein.

In analoger Weise kann die Vorbandbaugruppe 402v des Kompaktors 102 als Bandförderer oder Gurtgliedförderer ausgestaltet sein.

Die Kompaktoranordnung 202 kann beispielsweise mindestens eine Selektiervorrichtung 202s aufweisen, die in ähnlicher oder gleicher Weise ausgestaltet sein kann, wie vorangehend beschrieben ist und vice versa.

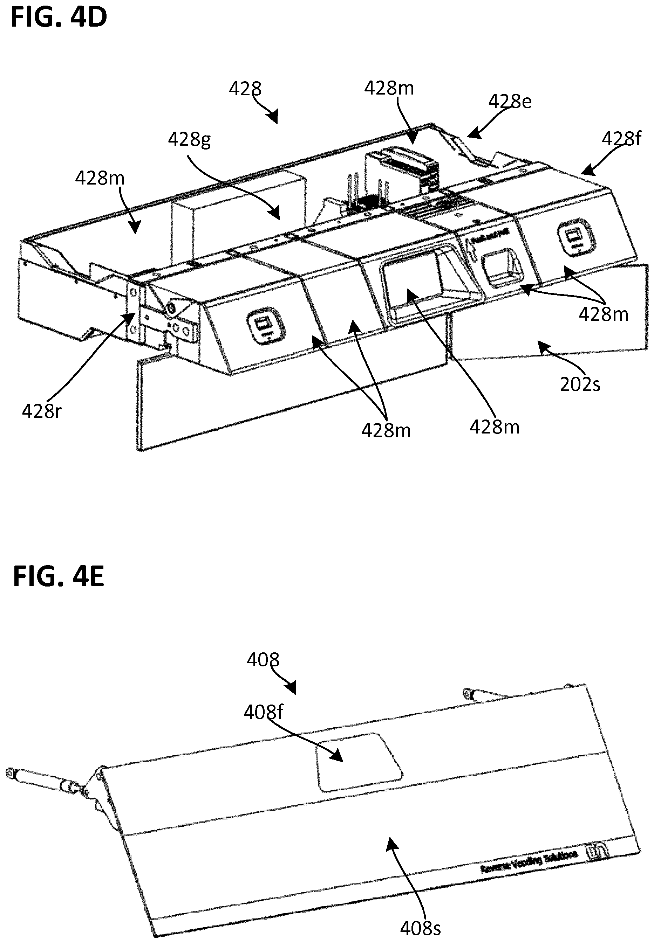

Die Kompaktoranordnung 202 kann beispielsweise mindestens eine Elektrobaugruppe 428 aufweisen, wie beispielsweise in **Fig.4D** in einer schematischen Ansicht dargestellt ist.

Die Elektrobaugruppe 428 kann beispielsweise elektrische und elektromechanische Bauelemente aufweisen zum Betreiben der Kompaktoranordnung 202, beispielsweise zum Betreiben des Kompaktors 102, der Leergut-Transportvorrichtung 202t, der Vorbandbaugruppe 402v, der Selektiervorrichtung 202s, etc. Als Betreiben kann dabei ein Steuern, ein Regeln, und/oder ein Versorgen mit elektrischer Energie verstanden werden.

Die Elektrobaugruppe 428 kann beispielsweise an dem Tragegestell 204a angeordnet sein oder werden. Die Elektrobaugruppe 428 kann beispielsweise modular ausgestaltet sein und eine Vielzahl von Modulen 428m aufweisen. Die Module 428m können beispielsweise ein oder mehrere Elektronik-Module, ein oder mehrere Elektromechanik-Module, etc., aufweisen. Die Module 428m der Elektrobaugruppe 428 können mittels einer gemeinsamen Lageranordnung 428r (z.B. eines Rahmens, etc.) lösbar (z.B. steckbar) gelagert sein oder werden. Die gemeinsame Lageranordnung 428r kann beispielsweise beweglich eingerichtet sein, z.B. kann diese verschiebbar und/oder schwenkbar eingerichtet sein. Alternativ dazu kann die gemeinsame Lageranordnung 428r ortsfest an dem Tragegestell 204a montiert sein oder werden.

In einigen Ausgestaltungen kann die Selektiervorrichtung 202s beispielsweise als Modul 428m der Elektrobaugruppe 428 ausgestaltet sein. Die Selektiervorrichtung 202s kann beispielsweise eine schwenkbar gelagerte Klappe aufweisen. Die schwenkbar gelagerte Klappe kann derart eingerichtet sein, dass diese in einer ersten Position Leergut 104 von der Leergut-Transportvorrichtung 202t zu dem Kompaktor 102 leitet, anschaulich selektiert, und in einer zweiten Position das Leergut 104 auf der Leergut-Transportvorrichtung 202t zu belassen.

Die Module 428m der Elektrobaugruppe 428 können beispielsweise derart eingerichtet sein, dass diese auf einfache Weise zugänglich sind, so dass diese beispielsweise von einem Benutzer ausgetauscht werden können.

Die Elektrobaugruppe 428 kann beispielsweise mehrere Versorgungs-Module aufweisen, die beispielsweise als Elektrokästen 428e ausgestaltet sind. Beispielsweise kann ein Elektrokasten eingerichtet sein, eine Starkstrom-Versorgung bereitzustellen. Ferner kann ein weiterer Elektrokasten eingerichtet sein, Steuerfunktionen bereitzustellen, z.B. bei einer Niederspannung, z.B. 12 V, 24 V, etc. Die Steuerfunktionen können mittels einer entsprechend eingerichteten Steuerungselektronik realisiert werden. Die Elektrokästen 428e können beispielsweise derart eingerichtet und gelagert sein, dass diese (z.B. nach oben) entnehmbar sind. Somit können diese bei Bedarf beispielsweise mittels weniger Handgriffe ausgetauscht werden. Ferner kann beispielsweise ein Freiraum 428g vorgehalten werden für einen oberseitigen Zugriff zum Schneidwerk.

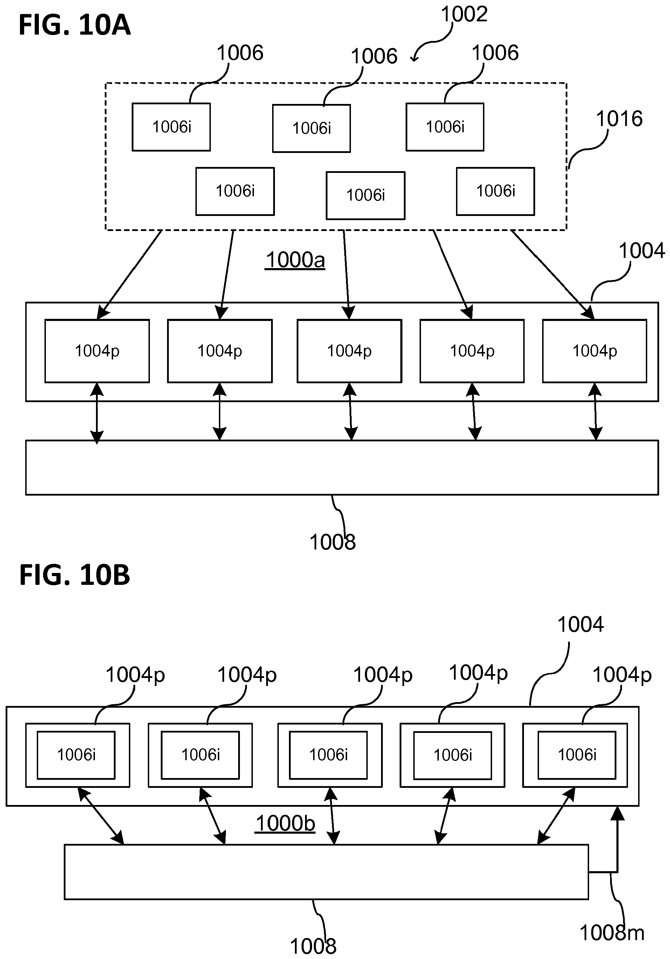

Mehrere Funktionsmodule der Elektrobaugruppe 428 können als Frontbaugruppe 428f (siehe Funktionsmodulanordnung 1002 in den Figuren 10A bis 11F) ausgestaltet sein. Die Frontbaugruppe 428f kann mittels einer elektrischen Schnittstelle (z.B. einer Verkabelungsbrücke) mit den Elektrokästen 428e verbunden sein. Die Funktionsmodule der Frontbaugruppe 428f können mittels der in den Elektrokästen 428e installierten elektrischen Leistungsversorgung mit elektrischer Leistung versorgt werden. Ferner können die Funktionsmodule der Frontbaugruppe 428f mittels der in den Elektrokästen 428e installierten Steuerelektronik, z.B. implementiert mittels mindestens eines Prozessors. Die Steuerelektronik kann je nach Bedarf vordefinierte Steuerbefehle und/oder Steuerabläufe erzeugen, und dementsprechend leistungsstark ausgestaltet sein, z.B. kann eine anwendungsspezifische integrierte Schaltung (ASIC) oder ein Computersystem (z.B. ein System auf einem Chip, SoC) zum Implementieren der Steuerung verwendet werden.

Die Kompaktoranordnung 202 kann beispielsweise mehrere Abdeckungen 408, 418 aufweisen. Die Abdeckungen 408, 418 können beispielsweise einen Teil eines Gehäuses (auch als Einhausung bezeichnet) bilden, welches die Komponenten der Kompaktoranordnung 202 zumindest abschnittweise einhaust. Die Abdeckungen 408, 418 können beispielsweise dazu dienen, Komponenten der Kompaktoranordnung 202 zu schützen und/oder Komponenten, die ein Risiko für einen Benutzer (z.B. eine Hochstromkomponente, ein Schneidwerk, bewegte Bauteile einer Transportvorrichtung, etc.) darstellen, abzuschirmen.

Die Einhausung der Kompaktoranordnung 202 kann beispielsweise unterteilt sein in eine obere Abdeckung 408 (z.B. eine obere Klappe) und in eine untere Abdeckung 418 (z.B. eine untere Klappe, auch als Containerklappe bezeichnet), siehe Fig. 4A. Die obere Abdeckung 408 kann beispielsweise die Transportstrecke (z.B. zumindest abschnittsweise die Leergut-Transportvorrichtung 202t der Kompaktoranordnung 202) abdecken. Die untere Abdeckung 418 kann beispielsweise einen Teil des Tragegestells 204a abdecken sowie einen Aufnahmeraum unterhalb des Tragegestells 204a, wenn dieses angehoben ist, zum Aufnehmen eines Sammelbehälters, wie beispielsweise vorangehend beschrieben ist.

**Fig.4E** veranschaulicht beispielsweise eine obere Abdeckung 408 in einer beispielhaften Ansicht.

Die obere Abdeckung 408 kann beispielsweise passend zu der Elektrobaugruppe 428 bereitgestellt sein, um beispielsweise einen einfachen Zugang zu den Modulen 428m der Elektrobaugruppe 428 zu gewährleisten, z.B. zum Austauschen eines oder mehrerer der Module 428m. Dazu kann die obere Abdeckung 408 derart beweglich montiert sein, dass diese geöffnet und geschlossen werden kann.

Ferner kann die obere Abdeckung 408 derart eingerichtet sein, dass mindestens ein Anzeigeelement eines Moduls 428m der Frontbaugruppe 428f für einen Benutzer sichtbar ist. Beispielsweise kann die obere Abdeckung 408 mindestens ein Sichtfenster 408f aufweisen, durch welches hindurch ein Anzeigeelement eines Moduls 428m der Frontbaugruppe 428f für einen Benutzer sichtbar ist.

Ferner kann die obere Abdeckung 408 derart eingerichtet sein, dass mindestens ein Eingabeelement der Module 428m der Frontbaugruppe 428f für einen Benutzer zugänglich ist.

Ferner kann die obere Abdeckung 408 derart eingerichtet sein, das Leergut 104, welches mittels der Leergut-Transportvorrichtung 202t in der Kompaktoranordnung 202 transportiert wird, für einen Benutzer sichtbar ist. Beispielsweise kann die obere Abdeckung 408 mindestens ein weiteres Sichtfenster 408s aufweisen, durch welches hindurch Leergut, das mittels der Leergut-Transportvorrichtung 202t in der Kompaktoranordnung 202 transportiert wird, für einen Benutzer sichtbar ist.

Die obere Abdeckung 408 kann beispielsweise als obere Klappe eingerichtet sein derart, dass sich diese automatisch öffnet. Das Öffnen kann beispielsweise mittels Gestik-Steuerung erfolgen oder mittels einer anderen Steuerung, z.B. einem Taster, einem Berührungssensor, etc. Der Öffnungsmechanismus der oberen Klappe kann beispielsweise mechanisch mittels zweier Gasdruckfedern realisiert sein oder auf eine andere geeignete Weise. In der entsprechenden Geschlossen-Stellung kann die obere Klappe mittels eines Fangriegelverschlusses gehalten werden. Die obere Abdeckung 408 kann derart bereitgestellt sein, dass diese werkzeugfrei entnehmbar bzw. austauschbar ist.

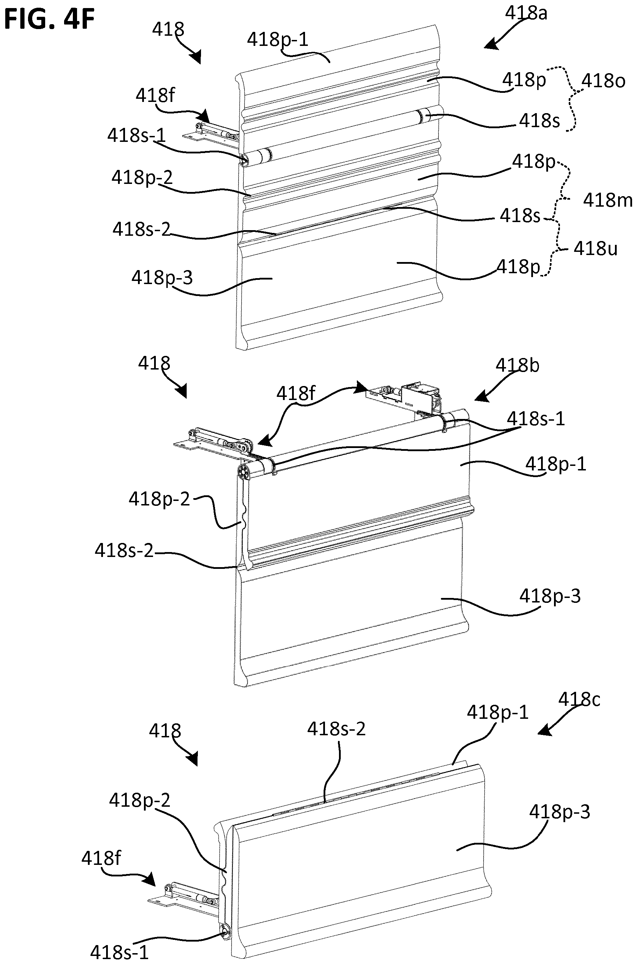

**Fig.4F** veranschaulicht beispielsweise eine untere Abdeckung 418 in verschiedenen Positionen 418a, 418b, 418c in einer beispielhaften Ansicht, gemäß verschiedenen Ausführungsformen.

Die untere Abdeckung 418 kann beispielsweise als eine Klappenanordnung 418 eingerichtet sein derart, dass diese mittels eines mehrteiligen Klappmechanismus in verschiedene Positionen 418a, 418b, 418c bewegt (z.B. geschwenkt bzw. geklappt) werden kann.

Gemäß verschiedenen Ausführungsformen kann die untere Abdeckung 418 eine mehrteilige (z.B. 3-teilige) Klappenanordnung 418 sein, wie nachfolgend im Detail beschrieben ist.

Wie in Fig.4F beispielhaft dargestellt ist, kann die Klappenanordnung 418 mehrere Abdeckplatten 418p aufweisen, z.B. eine erste Abdeckplatte 418p-1, eine zweite Abdeckplatte 418p-2 und eine dritte Abdeckplatte 418p-3. Die mehrere Abdeckplatten 418p können beispielsweise mittels mehrerer Scharnieranordnungen 418s, z.B. einer ersten Scharnieranordnung 418s-1 und einer zweiten Scharnieranordnung 418s-2, in verschiedene Positionen 418a, 418b, 418c bewegt werden.

Die Klappenanordnung 418 kann dabei mindestens eine Fixieranordnung 418f aufweisen. Die Fixieranordnung 418f kann beispielsweise die Klappenanordnung 418 in einer Geschlossen-Stellung 418a, in einer ersten Offen-Stellungen 418b, und/oder in einer zweiten Offen-Stellung 418c fixieren. Zum Fixieren der Klappenanordnung 418 in der jeweiligen Position kann zumindest eine der Abdeckplatten 418 Fixieranordnung 418f ortsfest gehalten werden.

In der Geschlossen-Stellung 418a können die zweite Abdeckplatte 418p-2 und die dritte Abdeckplatte 418p-3 aufgrund der Schwerkraft stabil gelagert sein (anschaulich können diese gemeinsam an der ersten Scharnieranordnung 418s-1 hängen).

Die dreiteilige Klappenanordnung 418 kann anschaulich zweiteilig gegliedert sein, d.h. beispielsweise anschaulich drei Klappen 418o, 418m, 418u aufweisen.

Die erste (z.B. obere) Abdeckplatte 418p-1 kann beispielsweise mit der zugehörigen ersten Scharnieranordnung 418s-1 eine obere Schwenkklappe 418o bilden. Die obere Schwenkklappe 418o kann beispielsweise derart eingerichtet sein, dass diese um ungefähr 180° geschwenkt werden kann, z.B. wenn die Klappenanordnung 418 aus der Geschlossen-Stellung 418a in die erste Offen-Stellung 418b gebracht werden soll und vice versa.

Die obere Schwenkklappe 418o kann beispielsweise in der Geschlossen-Stellung 418a mittels der Fixieranordnung 418f gehalten werden. Die obere Schwenkklappe 418o kann beispielsweise am Tragegestell 204a der Gestellanordnung 204 lösbar fixiert werden, siehe beispielsweise Fig.5A bis 5C.

Die obere Schwenkklappe 418o der Klappenanordnung 418 kann beispielsweise derart eingerichtet sein, dass diese nur geöffnet werden kann (siehe erste Offen-Stellung 418b), wenn die obere Abdeckung 408 bereits geöffnet ist.

Wie beispielsweise in Fig.4F veranschaulicht ist, kann die mittlere Abdeckplatte 418p-2 mit der zugehörigen zweiten Scharnieranordnung 418s-2 eine mittlere Schwenkklappe 418m bilden. Die untere Abdeckplatte 418p-3 kann beispielsweise mit der zugehörigen zweiten Scharnieranordnung 418s-2 eine untere Schwenkklappe 418u bilden.

In der Geschlossen-Stellung 418a können die Schwenkklappen bzw. Abdeckplatten 418 der Klappenanordnung 418 in einer gemeinsamen Ebene angeordnet sein. Die Schwenkklappen bzw. Abdeckplatten 418 der Klappenanordnung 418 bilden dann eine im Wesentlichen geschlossene Fläche.

In der ersten Offen-Stellung 418b können die mittlere Schwenkklappe 418m und die untere Schwenkklappe 418u (bzw. die zweite Abdeckplatte 418p-2 und die dritte Abdeckplatte 418p-3) der Klappenanordnung 418 in einer gemeinsamen Ebene angeordnet sein. Diese bilden dann eine im Wesentlichen geschlossene Fläche. In der ersten Offen-Stellung 418b kann die obere Schwenkklappe 418o (bzw. die erste Abdeckplatte 418p-1) über die mittlere Schwenkklappe 418m (bzw. die zweite Abdeckplatte 418p-2) geklappt sein.

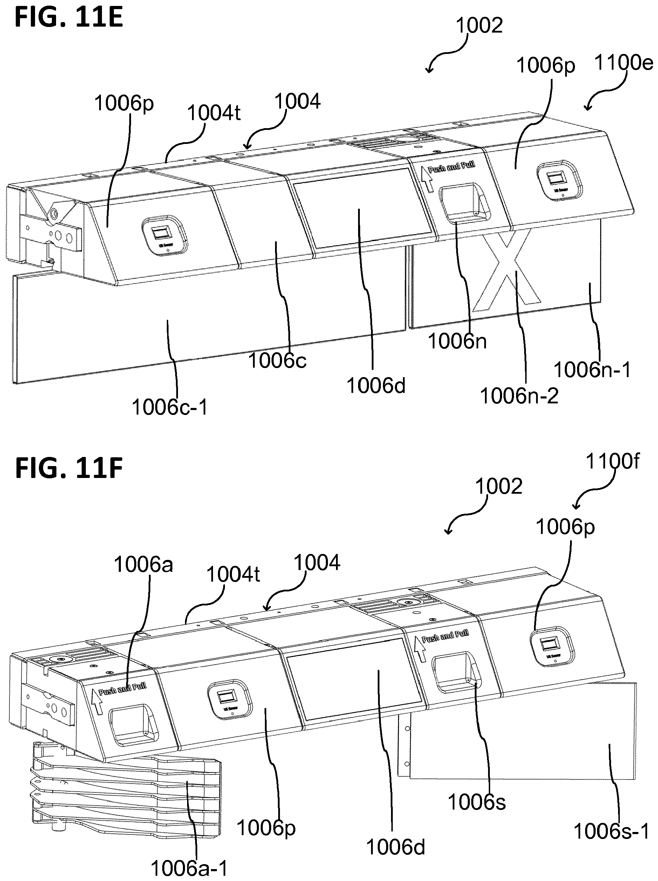

In der zweiten Offen-Stellung 418c, kann die obere Schwenkklappe 418o in der gleichen Stellung sein, wie in der Geschlossen-Stellung 418a. Die mittlere Schwenkklappe 418m sowie die untere Schwenkklappe 418u können einander entgegengesetzt eingeklappt werden und nach oben geschwenkt werden. In der zweiten Offen-Stellung 418c können die drei Schwenkklappen (bzw. Abdeckplatten 418) der Klappenanordnung 418 übereinander angeordnet sein. So wird ein geringer Platzbedarf beim Schwenken benötigt. Ferner wird ein geringer Platzbedarf in der zweiten Offen-Stellung 418c benötigt, so dass die Kompaktoranordnung 202 beispielsweise in diese Position platzsparend transportiert werden kann und gleichzeitig auf einfache Weise montiert werden kann (siehe Fig. 11).

Die Klappenanordnung 418 kann beispielsweise derart eingerichtet sein, dass diese händisch unterstützt oder vollautomatisch geöffnet werden kann. Dazu kann die Klappenanordnung 418 eine geeignete Antriebssystematik aufweisen.

Die Klappenanordnung 418 kann beispielsweise derart eingerichtet sein, dass sich die untere Schwenkklappe 418u selbsttätig relativ zu der mittleren Schwenkklappe 418m bewegt, wenn die mittlere Schwenkklappe 418m bewegt wird. Somit kann es beispielsweise ausreichend sein, die mittlere Schwenkklappe 418m mittels eines Aktors zu bewegen um die Klappenanordnung 418 in die zweite Offen-Stellung 418c zu bringen.

Beispielsweise kann ein vollautomatischer Öffnungs- und Schließmechanismus bereitgestellt sein oder werden. Alternativ dazu kann ein vollautomatischer Öffnungsmechanismus und ein manueller Schließmechanismus bereitgestellt sein oder werden, ein manueller Öffnungsmechanismus und ein vollautomatischer Schließmechanismus, oder ein manueller Öffnungs- und Schließmechanismus.

Wie vorangehend beispielhaft beschrieben ist, kann die obere Abdeckung 408 derart eingerichtet sein, dass diese vollautomatisch geöffnet und/oder vollautomatisch geschlossen werden kann. Ferner kann die Klappenanordnung 418 derart eingerichtet sein, dass diese vollautomatisch geöffnet und/oder vollautomatisch geschlossen werden kann.

Dabei kann eine Kompaktoreinrichtung 300, die beispielsweise mehrere Kompaktoranordnungen 202 aufweist, eine zentrale Steuerung aufweisen (z.B. implementiert in der Elektrobaugruppe 428, z.B. implementiert in eine kompaktoranordnung-externe Steuervorrichtung, etc.), zum jeweiligen vollautomatischen Öffnen und/oder vollautomatischen Schließen der unteren Klappenanordnung 418 und/oder der oberen Abdeckung 408. Die jeweilige Bewegung zum Öffnen und/oder Schließen kann mittels eines Sensors ausgelöst werden, z.B. basierend auf Gestenerkennung eines Benutzers, einer Eingabe eines Benutzers an einem Bedienfeld, eines Schalters, etc. Alternativ dazu kann das Öffnen und/oder das Schließen zeitgesteuert erfolgen oder automatisch basierend auf einem Auslöseereignis (z.B. eines Fehlersignals, etc.).

Gemäß verschiedenen Ausführungsformen kann die Fixieranordnung 418f eine mechanische Halterung, eine elektromechanische Halterung, eine magnetische Halterung, eine elektromagnetische Halterung, etc. aufweisen.

Wie in Fig.4F beispielhaft veranschaulicht ist, kann eine Kompaktoranordnung 202, gemäß verschiedenen Ausführungsformen, eine Klappenanordnung 418 aufweisen. Die Klappenanordnung 418 kann an dem Tragegestell 204a montiert sein. Beispielsweise kann die erste Scharnieranordnung 418s-1 an dem Tragegestell 204a befestigt sein. Die zweite Scharnieranordnung 418s-2 kann beispielsweise nur die zweite Abdeckplatte 418p-2 und die dritten Abdeckplatte 418p-3 miteinander beweglich verbinden.

Die mehreren Scharnieranordnungen 418s der Klappenanordnung 418 können beispielsweise derart ausgestaltet sein, dass deren Dreh- bzw. Schwenkachsen im Wesentlichen parallel zueinander ausgerichtet sind.

Die erste Scharnieranordnung 418s-1 kann beispielsweise an einem ersten Endabschnitt der zweiten Abdeckplatte 418p-2 montiert sein und die zweite Scharnieranordnung 418s-2 kann an einem dem ersten Endanschnitt gegenüberliegenden zweiten Endabschnitt der zweiten Abdeckplatte 418p-2 montiert sein.

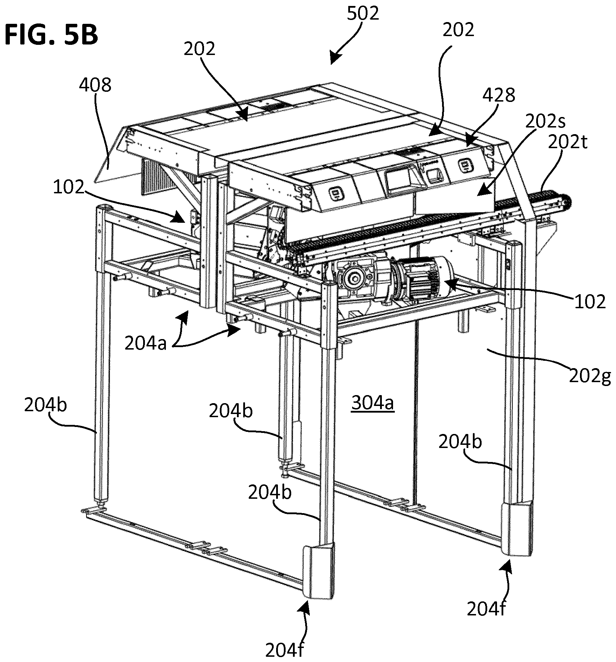

**Fig.5A** bis **Fig.5C** veranschaulichen jeweils einen Kompaktoranordnung-Verbund 502 mit mehreren Kompaktoranordnungen 202 in verschiedenen Darstellungen. Die Kompaktoranordnungen 202 können beispielsweise derart ausgestaltet sein, wie vorangehend beschrieben ist. Der Kompaktoranordnung-Verbund 502 kann anschaulich als ein Doppelmodul ausgestaltet sein, wie in Fig.5A und Fig.5B beispielhaft dargestellt ist.

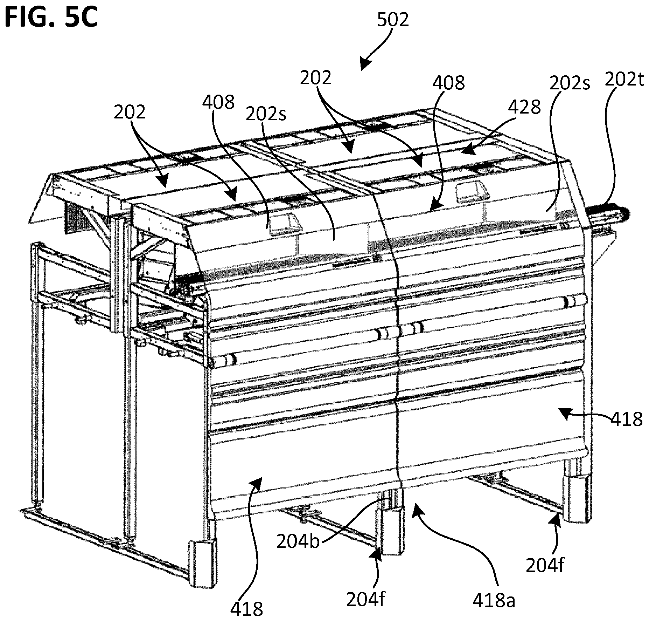

Ferner kann der Kompaktoranordnung-Verbund 502 mehrere Doppelmodule aufweisen, z.B. zwei in Reihe angeordnete Doppelmodule, wie in Fig.5C beispielhaft dargestellt ist. Andere Konfigurationen, z.B. eine einzeln aufgestellte Kompaktoranordnung 202, zwei einzelne in einer Reihe angeordnete Kompaktoranordnungen 202, etc. sind ebenfalls möglich. Dazu kann beispielsweise die jeweilige Gestellanordnung 204 entsprechend modifiziert werden, z.B. kann eine einzelne Kompaktoranordnung 202 mittels vier Stützbeinen 204b aufgestellt sein oder werden und ein Doppelmodul mit zwei Kompaktoranordnungen 202 kann beispielsweise mittels mindestens vier (z.B. vier, sechs oder acht) Stützbeinen 204b aufgestellt sein oder werden.

Das jeweilige Doppelmodul kann beispielsweise zwei Kompaktoranordnungen 202 aufweisen, die Rücken-an-Rücken zueinander angeordnet sind. Somit sind beispielsweise zwei Transportstrecken 306 jeweils von einander gegenüberliegenden Seiten des Doppelmoduls zugänglich. Die Transportstrecken 306 werden von den jeweiligen Leergut-Transportvorrichtungen 202t der Kompaktoranordnungen 202 gebildet.

Mittels jeweils einer Selektiervorrichtung 202s kann Leergut selektiv von den Transportstrecken 306 in den jeweiligen Kompaktor 102 der Kompaktoranordnung 202 geführt werden. Nach dem Zerkleinern des Leerguts kann diese in einem Sammelbehälter gesammelt werden, der unterhalb des jeweiligen Kompaktors 102 in dem Aufnahmeraum 304a angeordnet sein oder werden kann. Zum Austauschen bzw. Einbringen des Sammelbehälters in den Aufnahmeraum 304a und/oder Herausnehmen des Sammelbehälters aus dem Aufnahmeraum 304a kann die Klappenanordnung 418 geöffnet werden, z.B. kann die Klappenanordnung 418 in die zweite Offen-Stellung 418c geklappt werden, wie vorangehend beschrieben ist. Ferner kann die Klappenanordnung 418 zum Warten und/oder Montieren des Kompaktors 102, der Leergut-Transportvorrichtungen 202t, etc. geöffnet werden, z.B. kann die Klappenanordnung 418 in die erste Offen-Stellung 418b geklappt werden, wie vorangehend beschrieben ist.

Wie beispielsweise in Fig.5A und Fig.5B veranschaulicht ist, kann die Klappenanordnung 418 derart eingerichtet sein, dass die zweite Abdeckplatte 418p-2 und die dritte Abdeckplatte 418p-3 den Aufnahmeraum 304a zum Aufnehmen des Sammelbehälters zumindest abschnittsweise abdecken, wenn diese in der Geschlossen-Stellung 418a ist.

Wie beispielsweise in Fig.5C veranschaulicht ist, kann sich eine gemeinsame Leergut-Transportvorrichtung 202t durch zwei einander benachbarte Kompaktoranordnungen 202 hindurch erstrecken. Ferner kann sich die Leergut-Transportvorrichtung 202t durch eine Öffnung in der Seitenwand des Gehäuses 202g hindurch erstrecken und derart eingerichtet sein, dass ein Abstand der Kompaktoranordnung 202 zu einer weiteren Kompaktoranordnung 202 oder zu einem anderen Transportsystem überbrückt werden kann.

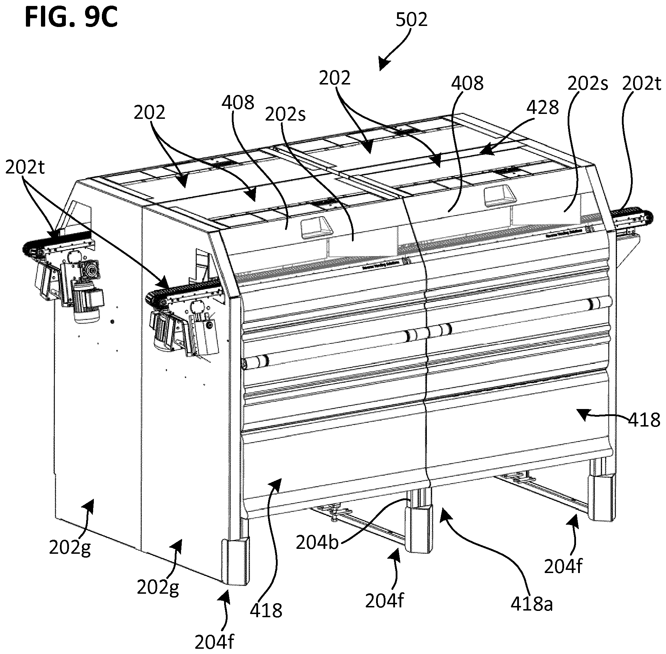

Ferner können weitere Gehäuseteile montiert werden, z.B. seitliche Gehäuseteile, obere Gehäuseteile, etc., wie beispielsweise in Fig.9C veranschaulicht ist.

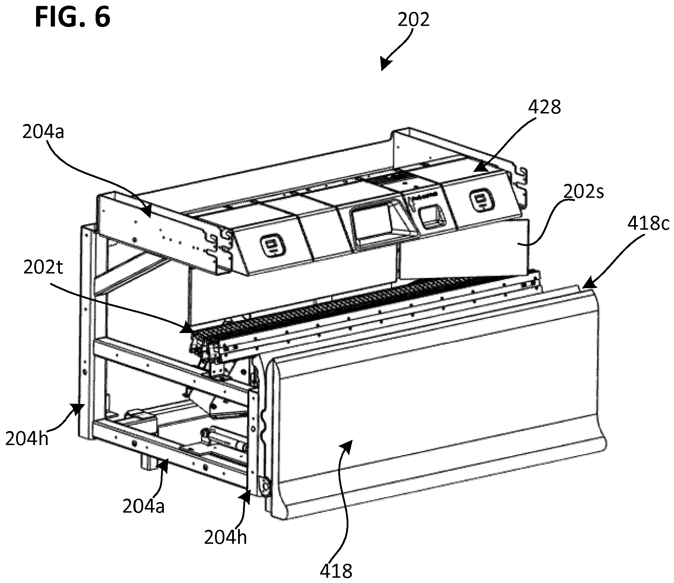

**Fig.6** veranschaulicht eine Kompaktoranordnung 202 in einer schematischen Darstellung, z.B. während des Transportierens, z.B. vor dem Aufstellen.

Dabei kann die Kompaktoranordnung 202 modular ausgestaltet sein, z.B. wie vorangehend beschrieben ist. Aufgrund einer modularen Ausgestaltung, insbesondere der Gestellanordnung 204 und/oder der Klappenanordnung 418, kann die Kompaktoranordnung 202 auf einfache Weise transportiert und aufgestellt werden. Während eines Transports kann die Kompaktoranordnung 202 mittels weniger Montageschritte auf ein geringes Volumen gebracht werden. In analoger Weise kann die Kompaktoranordnung 202 mittels weniger Montageschritte aufgestellt werden.

Wie beispielsweise in Fig.6 dargestellt ist, kann die Klappenanordnung 418, wie vorangehend beschrieben, in der zweiten Offen-Stellung 418c sein, während die Kompaktoranordnung 202 zu deren Aufstellort transportiert und/oder von deren Aufstellort abtransportiert wird.

In dieser Position können die Abdeckplatten 418 der Klappenanordnung 418 mittels der Fixieranordnung 418f oder mittels einer weiteren Fixieranordnung gehalten werden. Anschaulich kann eine Fixieranordnung oder können mehrere Fixieranordnungen zum Fixieren der drei Abdeckplatten 418 der Klappenanordnung 418 in der zweiten Offen-Stellung 418c eingerichtet sein.

In der zweiten Offen-Stellung 418c kann beispielsweise ein Bereich des Tragegestells 204a, in dem der Kompaktor 102 angeordnet ist oder aufgenommen werden kann, von mindestens der ersten Abdeckplatte 418p-1 zumindest abschnittsweise abgedeckt sein. Die Elektrobaugruppe 428 der Kompaktoranordnung 202 kann beispielsweise zugänglich sein, unabhängig von der Position der Klappenanordnung 418. Die Leergut-Transportvorrichtung 202t kann beispielsweise abschnittsweise abgedeckt sein, z.B. kann ein direkter Zugang von vorn mittels der Klappenanordnung 418 verhindert sein, wenn diese in der Geschlossen-Stellung 418a oder in der zweiten Offen-Stellung 408c ist, aber nicht verhindert sein, wenn die Klappenanordnung 418 in der ersten Offen-Stellung 408b ist.

Eine modulare Ausgestaltung der weiteren Komponenten der Kompaktoranordnung 202, insbesondere der Elektrobaugruppe 428, der Leergut-Transportvorrichtung 202t, des Kompaktors 102, etc. kann die Kompaktoranordnung 202 auf einfache Weise gewartet werden, zum Beispiel können defekte Bauteile auf einfache Weise ausgetauscht werden, verschmutzte Teile auf einfache Weise gereinigt werden, etc.

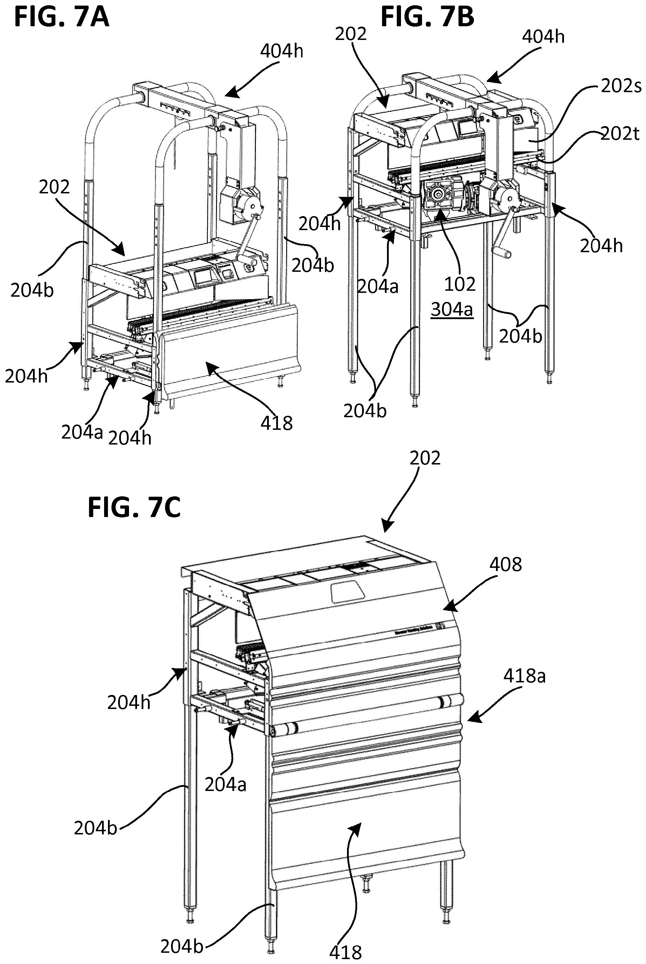

**Fig.7A** bis **Fig.7C** veranschaulichen eine Kompaktoranordnung 202 in verschiedenen Darstellungen, z.B. während des Aufstellens bzw. Montierens der mehreren Kompaktoranordnungen 202.

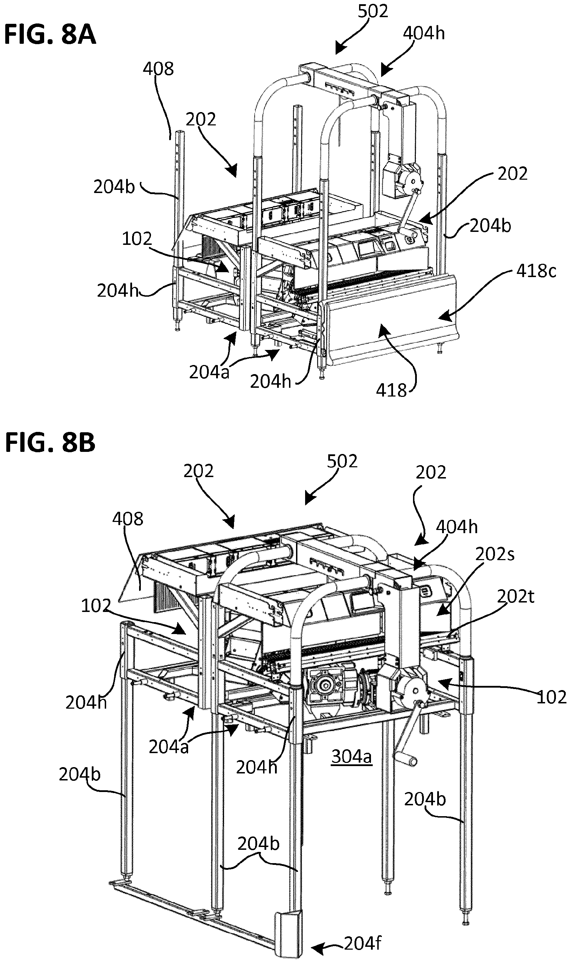

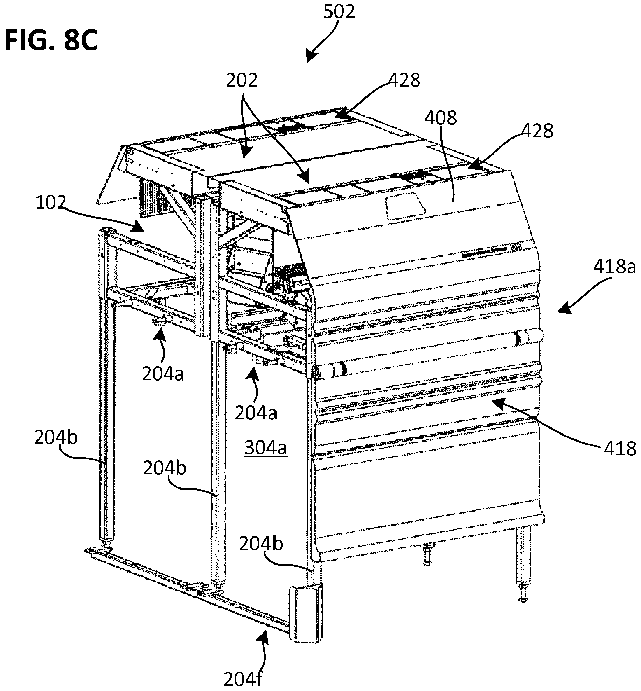

**Fig.8A** bis **Fig.8C** veranschaulichen zwei Kompaktoranordnungen 202 (z.B. ein Doppelmodul 202d bzw. ein Kompaktoranordnung-Verbund 502) in verschiedenen Darstellungen, z.B. während des Aufstellens bzw. Montierens der zwei Kompaktoranordnungen 202.

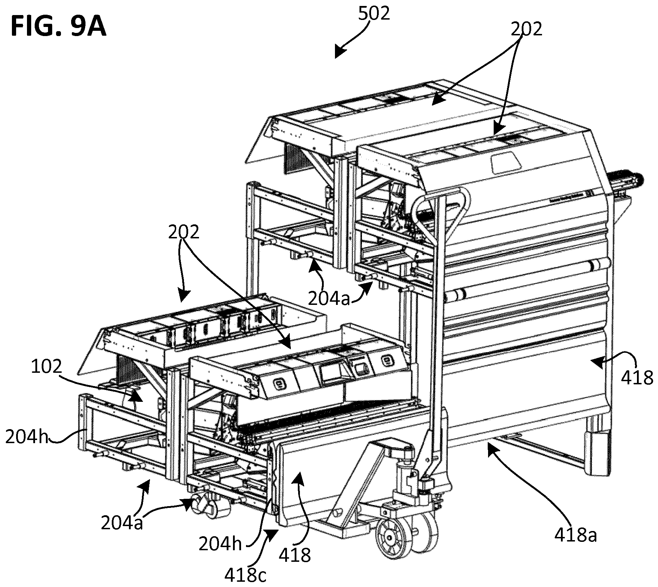

**Fig.9A** bis **Fig.9C** veranschaulichen vier Kompaktoranordnungen 202 (z.B. zwei Doppelmodule 202d bzw. ein Kompaktoranordnung-Verbund 502) in verschiedenen Darstellungen, z.B. während des Aufstellens bzw. Montierens der vier Kompaktoranordnungen 202.

Fig.7A, Fig.8A und Fig.9A zeigen jeweils beispielhaft eine oder mehrere auf dem Boden abgestellte Kompaktoranordnungen 202 (siehe ferner beispielsweise Fig.6). Dabei kann das Tragegestell 204a der Gestellanordnung 204 mehrere Hohlprofile 204h aufweisen. Diese Hohlprofile 204h sind beispielsweise derart passend zu den Stützbeinen 204b der Gestellanordnung 204 ausgestaltet, dass je ein Stützbein 204b durch je ein Hohlprofil 204h hindurch gesteckt werden kann zum Aufstellen des Tragegestells 204a auf dem Boden.

Die Stützbeine 204b können beispielsweise mittels einer Hubvorrichtung 404h durch die mehreren Hohlprofile 204h hindurch bewegt werden zum Anheben des Tragegestells 204a auf eine vordefinierte Höhe, wie beispielsweise jeweils in Fig.7B, Fig.8B und Fig.9B veranschaulicht ist.

Die Hubvorrichtung 404h kann beispielsweise derart eingerichtet sein, dass eine Kraft zwischen dem Tragegestell 204a und den Stützbeinen 204b übertragen wird zum Anheben des Tragegestells 204a. Die Hubvorrichtung 404h kann dazu beispielsweise auf den mehreren Stützbeinen 204b abgestützt (z.B. aufgesteckt oder aufgesetzt) sein oder werden. Das Tragegestell 204a kann beispielsweise eine Aufhängstruktur aufweisen zum Ankuppeln der Hubvorrichtung (zum Beispiel mittels eines Zugmittels, z.B. ein Seil, eine Kette, etc.), so dass das Tragegestell 204a mittels der Hubvorrichtung 404h angehoben werden kann.

Eine Verbindungsstruktur (z.B. Bolzen, Schrauben, etc.) kann zum Verbinden des Tragegestells 204a mit den mehreren Stützbeinen 204b verwendet werden, dass das Tragegestell 204a auf den Stützbeinen 204b in der vordefinierten Höhe abgestützt wird.

Ferner kann das Tragegestell 204a ein erstes Tragegestellteil und ein zweites Tragegestellteil (beispielsweise einen Tragrahmen 402t, wie vorangehend beschrieben ist) aufweisen. Dabei kann der Kompaktor 102 der Kompaktoranordnung 202 auf dem zweiten Tragegestellteil angeordnet sein. Das erste Tragegestellteil kann derart eingerichtet sein (siehe beispielsweise FIG.4A, Fig.4B und Fig.5B), dass dieses einen Aufnahmeraum zum Aufnehmen des auf dem zweiten Tragegestellteil angeordneten Kompaktors 102 bildet.

Anschaulich kann die Kompaktoranordnung 202 beispielsweise in folgender Weise montiert (z.B. aufgestellt) werden: Aufstellen eines Tragegestells 204a auf einen Untergrund, wobei das Tragegestell 204a mehrere Hohlprofile 204h aufweist; Einstecken mehrerer Stützbeine 204b in die mehreren Hohlprofile 204h hinein, wobei jeweils ein Stützbein 204b der mehreren Stützbeine 204b in ein Hohlprofil 204h der mehreren Hohlprofile 204h gesteckt ist; Durchschieben der jeweiligen Stützbeine 204b durch die zugehörigen Hohlprofile 204h zum Anheben des Tragegestells 204a auf eine vordefinierte Höhe; und Verbinden des Tragegestells 204a mit den mehreren Stützbeinen 204b, so dass das Tragegestell 204a auf den mehreren Stützbeinen 204b in der vordefinierten Höhe abgestützt wird. Dabei kann zum Durchschieben der Stützbeine 204b durch die Hohlprofile 204h hindurch eine Hubkraft (z.B. mittels eine Zugmittels erzeugt) zwischen den Stützbeinen 204b und dem Tragegestell 204a erzeugt werden.

Anschaulich kann das Tragegestell 204a mittels der Stützbeine 204b und der Hubvorrichtung 404h selbsthebend aufgestellt werden.

Fig.7C, Fig.8C und Fig.9C zeigen jeweils beispielhaft eine oder mehrere aufgestellte Kompaktoranordnungen 202 (siehe ferner beispielsweise Fig.5A bis 5C und Fig.6).

Nach dem Anheben der jeweiligen Kompaktoren 102 mittels des Tragegestells 204a und der Stützbeine 204b auf eine vordefinierte Höhe, können beispielsweise weitere Komponenten der Kompaktoranordnung 202 montiert werden. Beispielsweise kann die obere Abdeckung 408 der jeweiligen Kompaktoranordnung 202 montiert werden. Ferner kann eine gemeinsame Leergut-Transportvorrichtung 202t montiert werden. Ferner kann ein Gehäuse 202g montiert werden, z.B. können ein oder mehrere Gehäuseteile montiert werden. Das Gehäuse kann beispielsweise seitliche und/oder obere Gehäuseteile aufweisen.

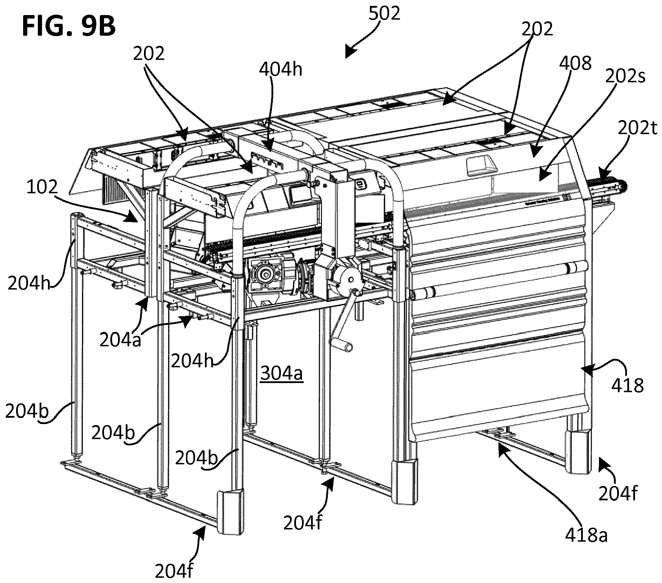

Wie in Fig.8B und 9B veranschaulicht ist, können mehrere Kompaktoranordnungen 202 mittels einer gemeinsamen Fußbaugruppe 204f montiert werden.

Wie in Fig.8B und 9B veranschaulicht ist, können beispielsweise zwei miteinander gekuppelte Tragegestelle 204a zweier Kompaktoranordnungen 202 gemeinsam angehoben werden. Dazu können sechs Stützbeine 204b verwendet werden. Anschließend können die mittleren zwei Stützbeine 204b wieder demontiert werden und die zwei Kompaktoranordnungen 202 können mittels vier Stützbeinen 204b aufgestellt sein.

Wie in Fig.9A veranschaulicht ist, kann die Kompaktoranordnung 202 mit demontierten Stützbeinen 204b geliefert werden und beispielsweise mittels eines Hubwagens transportiert werden.

Das Tragegestell 204a kann beispielsweise zweiteilig ausgestaltet sein, d.h. ein erstes und ein zweites Tragegestellteil aufweisen. Beispielsweise kann die Gestellanordnung 204 das Tragegestell 204a als erstes Tragegestellteil aufweisen, wie beispielsweise in Fig.4A dargestellt ist, und ferner kann die Gestellanordnung 204 den Tragrahmen 402t als zweites Tragegestellteil aufweisen, wie beispielsweise in Fig.4B dargestellt ist. Die beiden Tragegestellteile können beispielsweise lösbar miteinander gekuppelt sein oder werden, wie beispielsweise in Fig.6 und in den Figuren 7A bis 9C dargestellt ist.

Der Kompaktor 102 zum Kompaktieren von Leergut 104 kann beispielsweise auf dem zweiten Tragegestellteil angeordnet sein, wobei das erste Tragegestellteil 402t mit den Stützbeinen 204b verbunden werden kann. Somit kann beispielsweise der Kompaktor 102 ausgetauscht werden, ohne den Rest der Kompaktoranordnung 202 zu demontieren. Der Kompaktor 102 kann beispielsweise gemeinsam mit dem zweiten Tragegestellteil mittels einer Hubvorrichtung abgesenkt werden, während das erste Tragegestellteil mittels der Stützbeine aufgestellt bleibt.

Ein Montieren der Kompaktoranordnung 202 kann beispielsweise Folgendes aufweisen: Aufstellen eines ersten Tragegestellteils, wobei das erste Tragegestellteil einen Aufnahmeraum zum Aufnehmen eines zweiten Tragegestellteils aufweist; Anordnung des zweiten Tragegestellteils unterhalb des Aufnahmeraums, wobei ein Kompaktor auf dem zweiten Tragegestellteil angeordnet ist; Einbringen des auf dem zweiten Tragegestellteil angeordneten Kompaktors in den Aufnahmeraum des ersten Tragegestellteils; und anschließend Befestigen des zweiten Tragegestellteils an dem ersten Tragegestellteil mittels einer lösbaren Verbindung.

Wie beispielsweise vorangehend beschrieben ist (siehe beispielsweise Fig.4D), kann die Kompaktoranordnung 202, gemäß verschiedenen Ausführungsformen, eine Funktionsmodulanordnung (auch als Frontbaugruppe 428f bezeichnet) aufweisen, welche Teil der Elektrobaugruppe 428 sein kann oder mit der Elektrobaugruppe gekoppelt sein kann. Die Funktionsmodulanordnung kann beispielsweise an dem Tragegestell 204a montiert sein, z.B. oberhalb der Leergut-Transportvorrichtung 202t. Die Funktionsmodulanordnung 1002 kann zumindest ein Funktionsmodul aufweisen, welches die Funktion der vorangehend beschriebenen Selektiervorrichtung übernimmt.

Im Folgenden werden verschiedene Ausführungsformen der Funktionsmodulanordnung 1002 im Detail beschrieben.

**Fig.10A** und **Fig.10B** veranschaulichen eine Funktionsmodulanordnung 1002 in jeweils einer schematischen Ansicht, gemäß verschiedenen Ausführungsformen. Die Funktionsmodulanordnung 1002 kann beispielsweise zumindest in einigen Aspekten in ähnlicher oder gleicher Weise ausgestaltet sein, wie es vorangehend mit Bezug auf die Frontbaugruppe 428f der Kompaktoranordnung 202 beschrieben ist und vice versa.

Gemäß verschiedenen Ausführungsformen kann die Funktionsmodulanordnung 1002 eine Modulaufnahme 1004 aufweisen. Die Modulaufnahme 1004 kann eingerichtet sein, dass mehrere Funktionsmodule 1006 in der Modulaufnahme 1004 aufgenommen (1000a) werden können.

Ferner kann die Funktionsmodulanordnung 1002 die mehreren Funktionsmodule 1006 aufweisen, welche derart eingerichtet sind, dass diese in der Modulaufnahme 1004 aufgenommen (1000a) werden können. Anschaulich kann ein Satz 1016 an Funktionsmodulen 1006 bereitgestellt sein, wobei ein oder mehrere der Funktionsmodule 1006 aus dem jeweiligen Satz 1016 an Funktionsmodulen 1006 wahlweise in der Modulaufnahme 1004 aufgenommen 1000a werden können.

Dabei sind die Modulaufnahme 1004 und die mehreren Funktionsmodule 1006 (z.B. die Funktionsmodule 1006 aus dem Satz 1016 an Funktionsmodulen 1006) derart bereitgestellt, dass die Funktionsmodule 1006 gemäß verschiedenen Konfigurationen in der Modulaufnahme 1004 aufgenommen werden können. Anschaulich kann beispielsweise die Anzahl der bereitgestellten Funktionsmodule 1006 größer sein, als in einer Konfiguration in der Modulaufnahme 1004 aufgenommen werden, so dass sich daraus unterschiedliche Möglichkeiten der Konfiguration ergeben. Ferner kann die Modulaufnahme 1004 verschiedene Aufnahmepositionen 1004p aufweisen, in welchen jeweils ein Funktionsmodul 1006 aufgenommen werden kann. Somit können sich beispielsweise verschiedene Konfigurationen daraus ergeben, dass ein jeweiliges Funktionsmodul in verschiedenen Aufnahmepositionen 1004p in dem Modulaufnahme 1004 aufgenommen werden kann.

Gemäß verschiedenen Ausführungsformen kann die Modulaufnahme 1004 einen Halterahmen, einen Einsteckrahmen, etc., aufweisen zum jeweiligen Halten der Funktionsmodule 1006 in einer vordefinierten Aufnahmepositionen 1004p. Zusätzlich dazu kann die Modulaufnahme 1004 entsprechende elektrische Steckverbindungselemente aufweisen zum elektrischen Kontaktieren der in der Modulaufnahme 1004 aufgenommenen Funktionsmodule 1006. Anschaulich weist die Modulaufnahme 1004 eine oder mehrere elektrische Schnittstellen auf zum Versorgen der jeweils in der Modulaufnahme 1004 aufgenommenen Funktionsmodule 1006 und/oder zum Kommunizieren (z.B. Auslesen, Ansteuern, etc.) mit den jeweiligen in der Modulaufnahme 1004 aufgenommenen Funktionsmodulen 1006.

Gemäß der Erfindung wird mindestens ein Prozessor 1008 verwendet, welcher eingerichtet ist, eine Ist-Konfigurationen der mehreren Konfigurationen zu ermitteln 1000b und die Funktionsmodulanordnung 1002 wahlweise in einem Betriebsmodus 1008m aus mehreren Betriebsmodi zu betreiben basierend auf der ermittelten Ist-Konfiguration. Gemäß verschiedenen Ausführungsformen kann jeder Konfiguration die sich für die Funktionsmodulanordnung 1002 basierend auf den verschiedenen Kombinationen von in der Modulaufnahme 1004 aufgenommenen Funktionsmodulen 1006 ergibt, ein Betriebsmodus zugeordnet sein.

Anschaulich kann mittels des mindestens einen Prozessors 1008 ermittelt werden, welche Konfiguration der Funktionsmodule 1006 in der Modulaufnahme 1004 jeweils vorliegt, nachdem die entsprechenden Funktionsmodule 1006 in der Modulaufnahme 1004 aufgenommen wurden. Dieser jeweiligen Konfiguration kann ein Betriebsmodus zugeordnet sein, welcher basierend auf dem Ermitteln 1000b der Konfiguration ausgewählt werden kann.

Der mindestens eine Prozessor 1008 kann beispielsweise in einem Elektrokasten 428e der Kompaktoranordnung 202 angeordnet sein, Teil einer Steuerelektronik sein, etc. Der Elektrokasten 428e kann beispielsweise hinter der Funktionsmodulanordnung 1002 angeordnet sein, wie vorangehend beschrieben ist. Alternativ dazu kann der mindestens eine Prozessor 1008 in mindestens einem der Funktionsmodule 1006 integriert sein. Ferner kann der mindestens eine Prozessor 1008 in eine externe Steuervorrichtung integriert sein, die mit der Funktionsmodulanordnung 1002 kommunikativ gekoppelt ist.

Gemäß verschiedenen Ausführungsformen kann beispielsweise mindestens ein Funktionsmodul oder können mehrere Funktionsmodule oder alle Funktionsmodule der mehreren Funktionsmodule 1006 gemäß dessen Funktion eine Betriebsinformation 1006i zugeordnet sein. Somit kann der mindestens eine Prozessor 1008 derart eingerichtet sein, die Betriebsinformation 1006i des mindestens einen Funktionsmoduls (bzw. der mehreren Funktionsmodule oder aller Funktionsmodule) der mehreren Funktionsmodule 1006 zu ermitteln, wenn (z.B. sobald) dieses in der Modulaufnahme 1004 aufgenommen ist. Somit kann die Funktionsmodulanordnung 1002 beispielsweise basierend auf der ermittelten mindestens einen Betriebsinformation 1006i betrieben werden.

Gemäß verschiedenen Ausführungsformen kann der mindestens eine Prozessor 1008 derart eingerichtet sein, dass dieser in einem vordefinierten Zeitintervall die Ist-Konfiguration überprüft bzw. Änderungen der Konfiguration erkennt. Wenn eine Änderung der Konfiguration erkannt wird, kann der Betriebsmodus entsprechend geändert werden, sofern erforderlich.

Gemäß verschiedenen Ausführungsformen können die Modulaufnahme 1004 und die mehreren Funktionsmodule 1006 passend zueinander ausgestaltet sein, so dass diese ein modulares System bilden, das auf einfache Weise konfiguriert werden kann. Sofern erforderlich kann die Modulaufnahme 1004 derart eingerichtet sein, dass diese auf einfache Weise an die aufzunehmenden Funktionsmodule 1006 angepasst werden kann, siehe beispielsweise Fig.1 1A und Fig. 11B.

Wie in Fig.lOA beispielhaft dargestellt ist, kann die Modulaufnahme 1004 zum Aufnehmen 1000a mehrerer Funktionsmodule 1006 eingerichtet sein. Die Modulaufnahme 1004 kann eingerichtet sein, die Funktionsmodule 1006 mechanisch zu halten und in einer vordefinierten Position zu fixieren. Gemäß verschiedenen Ausführungsformen können die Modulaufnahme 1004 und die Funktionsmodule 1006 als Stecksystem ausgestaltet sein, wobei die Modulaufnahme 1004 mehrere Einsteckpositionen 1004p aufweist, in welche die jeweiligen Funktionsmodule 1006 eingesteckt werden können. Dabei kann ein eingestecktes Funktionsmodul 1006 mittels eines Schnellverschlusses (z.B. mittels einer selbsttätig einrastenden Verbindung, welche beispielsweise manuell gelöst werden kann) in der jeweiligen Einsteckposition fixiert sein oder werden.

Anschaulich kann die Funktionsmodulanordnung 1002 derart eingerichtet sein, dass diese basierend auf der Kombination verschiedener Funktionsmodule 1006 in verschiedene Konfigurationen gebracht werden kann. Die jeweils eingestellte Konfiguration (die einem Betriebsmodus entsprechen kann) kann dabei automatisch erkannt werden und der Betrieb der Funktionsmodulanordnung 1002 kann entsprechend der erkannten Konfiguration erfolgen. Somit kann beispielsweise vermieden werden, dass nach einer Änderung der Konfiguration der Funktionsmodulanordnung 1002 und/oder nach einem ersten Aufbau der Funktionsmodulanordnung 1002 diese manuell programmiert werden muss oder dass manuell ein Betriebsmodus ausgewählt werden muss.

Gemäß verschiedenen Ausführungsformen kann die Funktionsmodulanordnung 1002 derart eingerichtet sein, dass der Betriebsmodus basierend auf den verwendeten (d.h. in der Modulaufnahme 1004 aufgenommenen) Funktionsmodule 1006 automatisch eingestellt wird. Dies ermöglich beispielsweise eine Änderung der Konfiguration in einfacher Weise, z.B. ohne dass geschultes Fachpersonal benötigt wird. Die Funktionsmodule 1006 können derart eingerichtet sein, dass ein fehlerhafter Betrieb der Funktionsmodulanordnung 1002 ausgeschlossen ist.

Gemäß verschiedenen Ausführungsformen kann die Konfiguration der Funktionsmodulanordnung 1002 dadurch geändert werden, dass beispielsweise ein Funktionsmodul 1006 eines ersten Funktionsmodultyps, der in der Modulaufnahme 1004 aufgenommen ist, gegen ein Funktionsmodul 1006 eines (von dem ersten Funktionsmodultyp verschiedenen) zweiten Funktionsmodultyps ausgetauscht wird. Anschaulich wird somit die Konfiguration der Funktionsmodulanordnung 1002 dadurch verändert, dass zumindest eine Funktion der Funktionsmodulanordnung 1002 geändert wird. Gemäß verschiedenen Ausführungsformen kann die Konfiguration der Funktionsmodulanordnung 1002 dadurch geändert werden, dass beispielsweise die relative Anordnung der Funktionsmodule 1006 zueinander (zum Beispiel deren Reihenfolge) verändert wird. Anschaulich kann beispielsweise eine Betriebsrichtung der Funktionsmodulanordnung 1002 gewechselt werden, z.B. von einem Rechts-Betrieb auf einen Links-Betrieb (siehe beispielsweise Fig.11C und Fig.11D). Dies kann beispielsweise hilfreich sein, wenn die Kompaktoranordnung 202 in eine Kompaktoreinrichtung 300 mit mehreren Kompaktoranordnungen 202 integriert werden soll, wie vorangehend beschrieben. Beispielsweise können zwei Rücken-an-Rücken angeordnete Kompaktoranordnungen 202 entgegengesetzte Betriebsrichtungen aufweisen, d.h. einer der beiden Kompaktoranordnungen 202 ist im Links-Betrieb und die andere der beiden Kompaktoranordnungen 202 ist im Rechts-Betrieb.

Zum automatischen Anpassen bzw. zum automatischen Auswählen eines Betriebsmodus der Funktionsmodulanordnung 1002 basierend auf der jeweiligen Konfiguration, welche durch die jeweils in der Modulaufnahme 1004 aufgenommenen Funktionsmodule 1006 definiert sein kann, kann mindestens ein Prozessor 1008 verwendet werden. Als Prozessor 1008 kann jede beliebig geeignete elektronische Schaltung (basierend auf analoger oder digitaler Datenverarbeitung) verwendet werden, z.B. ein konventioneller Computerprozessor, eine anwendungsspezifische integrierte Schaltung (ASIC), etc. Anschaulich kann ein geeignetes Computersystem als eine zentrale oder dezentrale Steuerung bzw. Regelung verwendet werden. Im Allgemeinen können die jeweils hierin beschriebenen Funktionen mittels eines einzelnen Prozessors implementiert sein oder werden oder unter Verwendung mehrerer Prozessoren. Dabei kann dem mindestens einen Prozessor 1008 auch mindestens ein Speicher zugeordnet sein bzw. der mindestens eine Prozessor 1008 kann einen Speicher aufweisen.

Gemäß verschiedenen Ausführungsformen kann die Betriebsinformation 1006i in geeigneter Weise in dem jeweiligen Funktionsmodul 1006 kodiert oder abgespeichert sein. Die Betriebsinformation 1006i kann beispielsweise einen Funktionsmodultyp des jeweiligen Funktionsmoduls 1006 repräsentieren, so dass diese identifiziert werden kann. Ferner kann die Betriebsinformation 1006i eine Steuerinformation repräsentieren, welche bei der Steuerung der Kompaktoranordnung 202, z.B. bei der Ansteuerung der jeweiligen Funktionsmodule 1006, bei der Ansteuerung eines Kompaktors 102 der Kompaktoranordnung 202, etc., berücksichtigt wird.

**Fig.11A** und **Fig.11B** veranschaulichen beispielhaft eine Modulaufnahme 1004 in einer schematischen Ansicht, gemäß verschiedenen Ausführungsformen. **Fig.11C** bis **Fig.11F** veranschaulichen jeweils beispielhaft eine Funktionsmodulanordnung 1002 mit der Modulaufnahme 1004 und entsprechend in dieser aufgenommenen Funktionsmodulen 1006 in verschiedenen beispielhaften Konfigurationen 1100c bis 1100f.

Die Modulaufnahme 1004 kann beispielsweise in Form eines vorkonfigurierten oder eines konfigurierbaren Trägers 1004t bereitgestellt sein. An diesem Träger 1004t können beispielsweise zwei äußere Halteelemente 1004r fest oder lösbar montiert sein. Ferner kann der Träger 1004t beispielsweise vordefinierte Aussparungen 1004a (z.B. Durchgangslöcher) aufweisen. Mittels der Aussparungen 1004a in dem Träger 1004t können ein oder mehrere Halteelemente 1004h in verschiedenen Positionen an dem Träger 1004t montiert sein oder werden. Das jeweilige Halteelement 1004h kann mittels einer selbsttätig einrastenden Verbindung 1004v oder in einer anderen geeigneten Weise, z.B. mittels einer Schraubverbindung, etc., mit dem Träger 1004t verbunden sein oder werden.

Ferner kann der Träger 1004t beispielsweise vordefinierte weitere Aussparungen 1004b (z.B. weitere Durchgangslöcher) aufweisen. Mittels der weiteren Aussparungen 1004b in dem Träger 1004t können ein oder mehrere Elemente 1004e einer elektrischen Steckverbindung in verschiedenen Positionen an dem Träger 1004t montiert sein oder werden. Das jeweilige Element 1004e der elektrischen Steckverbindung kann beispielsweise mittels einer selbsttätig einrastenden Verbindung oder in einer anderen geeigneten Weise, z.B. mittels einer Schraubverbindung, etc., mit dem Träger 1004t verbunden sein oder werden.

Wie beispielsweise in Fig.11B veranschaulicht ist, kann die Modulaufnahme 1004 entsprechend zwischen den Halteelementen 1004r, 1004h mehrere Aufnahmepositionen 1004p zum Aufnehmen (z.B. Einsteckpositionen zum Einstecken) mehrerer Funktionsmodule 1006 aufweisen, wobei jeweils nur ein Funktionsmodul 1006 in einer der Aufnahmepositionen 1004p aufgenommen sein kann oder werden kann. Dabei sind die Modulaufnahme 1004 und die Funktionsmodule 1006 passend zueinander ausgestaltet. Die Aufnahmepositionen 1004p der Modulaufnahme 1004 können beispielsweise an die aufzunehmenden Funktionsmodule 1006angepasst sein oder werden, z.B. mittels Anpassens der Haltelemente 1004h und/oder der Elemente 1004e der elektrischen Steckverbindung.

Gemäß verschiedenen Ausführungsformen können die Funktionsmodule 1006 jeweils ein weiteres Element der elektrischen Steckverbindung aufweisen, so dass die Funktionsmodule 1006 entsprechend mittels der elektrischen Steckverbindung in den Aufnahmepositionen 1004p elektrisch kontaktiert sein können oder werden können.

Gemäß verschiedenen Ausführungsformen können die Elemente 1004e der elektrischen Steckverbindung derart eingerichtet sein, dass Funktionsmodule 1006 unterschiedlichen Typs (z.B. alle Funktionsmodule 1006 des Satzes 1016 an Funktionsmodulen 1006) an diese angesteckt sein können oder werden können.

Gemäß der Erfindung weist die Modulaufnahme 1004 entsprechende elektrische Schnittstellen zum elektrischen Kontaktieren der in der Modulaufnahme 1004 aufgenommenen Funktionsmodule 1006 auf, z.B. basierend auf den Elementen 1004e der elektrischen Steckverbindung. Mittels der elektrischen Schnittstellen kann eine Kommunikation zwischen dem mindestens einen Prozessor 1008 und den jeweiligen Funktionsmodulen 1006 und/oder eine Kommunikation zwischen den Funktionsmodulen 1006 selbst bereitgestellt sein oder werden (anschaulich können die elektrischen Schnittstellen als Daten- bzw. Kommunikations-Schnittstellen eingerichtet sein). Alternativ dazu kann die Kommunikation zwischen den jeweiligen Funktionsmodulen 1006 selbst und/oder zwischen dem mindestens einen Prozessor 1008 und den jeweiligen Funktionsmodulen 1006 mittels einer Drahtlos-Schnittstelle (z.B. mittels einer Funkschnittstelle) bereitgestellt sein oder werden.

Ferner kann mittels der elektrischen Schnittstellen eine Leistungsversorgung für die jeweils in der Modulaufnahme 1004 aufgenommenen Funktionsmodule 1006 bereitgestellt sein oder werden.

Fig. 11C und Fig. 11D veranschaulichen jeweils eine Funktionsmodulanordnung 1002 in einer schematischen Ansicht, gemäß verschiedenen Ausführungsformen. Die Funktionsmodulanordnung 1002 kann beispielsweise mehrere voneinander verschiedene Typen von Funktionsmodulen 1006 aufweisen, die gleichzeitig in der Modulaufnahme 1004 aufgenommen sind, z.B. gemäß einer ersten Konfiguration 1100c und in einer zweiten Konfiguration 1100d.

Die Funktionsmodulanordnung 1002 weist beispielsweise ein Selektiermodul 1006s (auch als Sortiermodul oder modulare Sortierbaugruppe bezeichnet) auf, z.B. als ein Funktionsmodul 1006 eines ersten Funktionsmodultyps. Gemäß verschiedenen Ausführungsformen kann das Selektiermodul 1006s derart eingerichtet sein, dass Leergut 104, welches mittels der Leergut-Transportvorrichtung 202t in der Kompaktoranordnung 202 geführt wird, selektiert werden kann, z.B. zum selektiven Zuführen des Leerguts 104 in den Kompaktor 102. Dabei kann das Leergut 104 beispielsweise klassifiziert sein oder werden und entsprechend selektiert werden, wie es vorangehend mit Bezug auf die Selektiervorrichtung 202s beschrieben ist.

Das Selektiermodul 1006s kann beispielsweise in die Modulaufnahme 1004 eingesteckt sein oder werden. Dabei kann mittels einer Sperrverriegelung ein unbeabsichtigtes herausziehen des Selektiermoduls 1006s verhindert werden. Das Selektiermodul 1006s kann beispielsweise oberhalb der Leergut-Transportvorrichtung 202t angeordnet sein, wenn diese in die Modulaufnahme 1004 eingesteckt ist.

Dabei kann Leergut 104 mittels einer schwenkbar gelagerten Klappe 1006s-1 (auch als Sortierflügel bezeichnet) des Selektiermoduls 1006s selektiv von der Leergut-Transportvorrichtung 202t in den Kompaktor 102 der Kompaktoranordnung 202 geführt werden. Die schwenkbar gelagerte Klappe 1006s-1 kann mittels eines Elektromotors betrieben werden, z.B. zwischen einer Ersten-Stellung (siehe Fig.1 1C und Fig.11D) und einer Zweiten-Stellung (vgl. Fig. 11E) geschwenkt werden.

Das Selektiermodul 1006s kann mittels einer elektrischen Steckverbindung kontaktiert sein, wenn dieses in der Modulaufnahme 1004 aufgenommen ist, siehe Fig.11B. Die elektrische Steckverbindung kann dabei beispielsweise mehrere Funktionen gewährleisten. Zum einen kann die Leistungsversorgung und die Ansteuerung der schwenkbar gelagerten Klappe 1006s-1 des Selektiermoduls 1006s selbst mittels der elektrischen Steckverbindung erfolgen. Zum anderen kann beispielsweise eine Betriebsinformation 1006i des Selektiermoduls 1006s übermittelt werden (z.B. an den mindestens einen Prozessor 1008 oder an ein anderes der in der Modulaufnahme 1004 aufgenommenen Funktionsmodule 1006), wie vorangehend beschrieben ist. Die Betriebsinformation 1006i kann dabei beispielsweise die Anwesenheit des Selektiermoduls 1006s und/oder deren Typ repräsentieren.

Basierend auf der Betriebsinformation 1006i des Selektiermoduls 1006s kann beispielsweise das Schneidwerk des Kompaktors 102 der Kompaktoranordnung 202 abgeschaltet werden, z.B., wenn das Selektiermodul 1006s nicht in der Modulaufnahme 1004 aufgenommen ist (anschaulich, wenn das Selektiermodul 1006s nicht anwesend ist). Basierend auf der Betriebsinformation 1006i des Selektiermoduls 1006s kann beispielsweise ein Betriebszustand der Funktionsmodulanordnung 1002 ausgewählt und eingestellt werden. Dabei kann basierend auf der Betriebsinformation 1006i ferner der Betrieb der Funktionsmodulanordnung 1002 dahingehend angepasst werden, ob es ein Rechts-Betrieb (z.B. mit dem in Fig.11D dargestellten Selektiermodultyp in Rechts-Konfiguration) oder ein Links-Betrieb (z.B. mit dem in Fig.11C dargestellten Selektiermodultyp in Links-Konfiguration).

Gemäß verschiedenen Ausführungsformen können die Modulaufnahme 1004 und die Funktionsmodule 1006 bezüglich der Anordnung des Selektiermoduls 1006s einen symmetrischen Aufbau aufweisen, so dass beispielsweise auf einfache Weise zwischen den beiden in Fig.11C und Fig.11D dargestellten Konfigurationen 1100c, 1100d (anschaulich zwischen der Rechts- und der Links-Konfiguration) gewechselt werden kann. Anschaulich kann ein Selektiermodul 1006s in der Links-Konfiguration in einer anderen Aufnahmeposition 1004p der Modulaufnahme 1004 angeordnet sein als in der Rechts-Konfiguration, wobei beispielsweise auch das Selektiermodul 1006s selbst entsprechend als Links-Selektiermodul 1006s (z.B. ein Selektiermodul eines ersten Selektiermodultyps) oder Rechts-Selektiermodul 1006s (z.B. ein Selektiermodul eines zweiten Selektiermodultyps) ausgestaltet sein kann.

Anschaulich können sich die Rechts- und die Links-Konfiguration in der Ausschleuse-Richtung für das Leergut 104 unterscheiden. Dabei kann die Funktionsmodulanordnung 1002 entweder in der Rechts-Konfiguration oder in der Links-Konfiguration betrieben werden, was basierend auf dem jeweiligen Selektiermodultyp des in der Modulaufnahme 1004 aufgenommenen Selektiermodul 1006s ermittelt werden kann.

Ferner kann die Funktionsmodulanordnung 1002 ein Selektierinformationsmodul 1006c (auch als Codier-Modul oder modulare Codierbaugruppe bezeichnet) aufweisen.

Basierend auf der Rechts/Links-Konfiguration bezüglich des Selektiermoduls 1006s kann, gemäß verschiedenen Ausführungsformen, die Aufnahmeposition 1004p für das Selektierinformationsmodul 1006c vorgegeben sein, wenn ein symmetrischer Aufbau realisiert sein soll. Anschaulich kann die gleiche Aufnahmeposition 1004p der Modulaufnahme 1004 sowohl für das Selektiermodul 1006s als auch für das Selektierinformationsmodul 1006c verwendet werden.

Gemäß verschiedenen Ausführungsformen kann das Selektierinformationsmodul 1006c eine Selektierinformation als Betriebsinformation 1006i bereitstellen, welche das Ansteuern bzw. das Betreiben des Selektiermoduls 1006s spezifizieren kann. Beispielsweise kann die von dem Selektierinformationsmodul 1006c bereitgestellte Selektierinformation definieren, welche Klasse (Art, Material, Farbe, etc.) von Leergut 104 mittels des Selektiermoduls 1006s selektiert werden soll. Gemäß verschiedenen Ausführungsformen kann der Satz 1016 an Funktionsmodulen 1006 für jede Klasse des Leerguts 104, die unterschieden werden soll, ein der Klasse zugeordnetes Selektierinformationsmodul 1006c aufweisen. Somit kann beispielsweise mittels Einbringens des jeweiligen Selektierinformationsmoduls 1006c in die Modulaufnahme 1004 eingestellt werden, welche Klasse von Leergut 104 mittels des Kompaktors 102 der Kompaktoranordnung 202 kompaktiert werden soll.

Mittels der elektrischen Steckverbindung, wie vorangehend beschrieben ist, kann eine elektrische Leistungsversorgung für das Selektierinformationsmodul 1006c bereitgestellt sein oder werden, sofern erforderlich. Ferner kann beispielsweise eine Betriebsinformation 1006i des Selektierinformationsmoduls 1006c übermittelt werden (z.B. an den mindestens einen Prozessor 1008 oder an ein anderes der in der Modulaufnahme 1004 aufgenommenen Funktionsmodule 1006). Die Betriebsinformation 1006i kann dabei beispielsweise die Anwesenheit des Selektierinformationsmoduls 1006c und/oder deren Selektierinformation repräsentieren.

Gemäß verschiedenen Ausführungsformen kann das Selektierinformationsmodul 1006c optional eine visuelle Anzeige 1006c-1 aufweisen. Somit kann beispielsweise angezeigt werden, welche Klasse des Leerguts 104 jeweils selektiert wird, z.B. Kunststoff klar, Kunststoff bunt, Dosen, Glas, etc. Die visuelle Anzeige 1006c-1 kann beispielsweise mittels einer Platte bereitgestellt sein, welche Beleuchtungskanäle aufweist, um den Betriebszustand anzuzeigen. Gemäß verschiedenen Ausführungsformen kann mittels der visuellen Anzeige 1006c-1 ein Füllstand eines Sammelbehälters 152, welcher der Funktionsmodulanordnung 1002 zugeordnet ist, angezeigt werden. Der Füllstand kann beispielsweise mittels eine Füllstand-Sensors ermittelt werden und basierend darauf kann die Anzeige erfolgen.

Gemäß verschiedenen Ausführungsformen kann die Funktionsmodulanordnung 1002 ein Peripheriemodul 1006p oder zwei (z.B. symmetrisch angeordnete) Peripheriemodule 1006p aufweisen. Dabei kann das eine Peripheriemodul 1006p oder zumindest eines der zwei Peripheriemodule 1006p mindestens einen Sensor aufweisen (hierin auch als Sensor-Modul 1006p bezeichnet).

Gemäß verschiedenen Ausführungsformen können zwei Peripheriemodule 1006p, wie beispielsweise in Fig.11C und 11D dargestellt ist, am äußeren Rand der Modulaufnahme 1004 positioniert sein oder werden. Die zwei Peripheriemodule 1006p können spiegelsymmetrisch angeordnet und identisch aufgebaut sein.

Das jeweilige Peripheriemodul 1006p kann beispielsweise Sensorik (z.B. einen oder mehrere Sensoren) aufweisen. Die Sensorik kann eingerichtet sein, einen Durchlauf eines Leerguts 104 zu erkennen, z.B. basierend auf Ultraschall und/oder Durchlicht.

Die Sensorik kann, gemäß verschiedenen Ausführungsformen, in dem Peripheriemodul 1006p von einem Modulgehäuse umgeben sein, d.h. diese liegt anschaulich nicht frei bzw. ist somit zugriffsgeschützt.

Gemäß verschiedenen Ausführungsformen kann ferner Sensorik für ein automatisches Öffnen und/oder Schließen der oberen Abdeckung 408 (z.B. basierend auf Gestensteuerung, etc.), wie vorangehend beschrieben ist, in zumindest einem der Peripheriemodule 1006p bereitgestellt sein.

Mittels der elektrischen Steckverbindung, wie vorangehend beschrieben ist, kann eine elektrische Leistungsversorgung für das jeweilige Peripheriemodul 1006p bereitgestellt sein oder werden, sofern erforderlich. Ferner kann beispielsweise eine Betriebsinformation 1006i des jeweiligen Peripheriemoduls 1006p übermittelt werden (z.B. an den mindestens einen Prozessor 1008 oder an ein anderes der in der Modulaufnahme 1004 aufgenommenen Funktionsmodule 1006). Die Betriebsinformation 1006i kann dabei beispielsweise die Anwesenheit des jeweiligen Peripheriemoduls 1006p und/oder deren Sensordaten, etc., repräsentieren.

Gemäß verschiedenen Ausführungsformen kann das jeweilige Peripheriemodul 1006p die jeweils benachbarte Baugruppe, z.B. kann die Funktion des Selektiermoduls 1006s, funktional ergänzen. Beispielsweise kann der Betrieb des jeweiligen Selektiermoduls 1006s basierend auf den mittels der Sensorik des benachbarten Peripheriemoduls 1006p ermittelten Sensordaten ergänzt werden. Somit kann beispielsweise Leergut 104 gemäß der von dem Selektierinformationsmodul 1006c definierten Klasse und basierend auf den Sensordaten selektiv kompaktiert werden kann.

Das jeweilige Peripheriemodul 1006p kann, gemäß verschiedenen Ausführungsformen, Bauraum für weitere funktionale Elemente (z.B. einen Sensor, eine Steuerung, eine Regelung, einen Sicherheitsschaltkreis, etc.) aufweisen, sowie, bei Bedarf, die jeweiligen weiteren funktionalen Elemente.

Gemäß verschiedenen Ausführungsformen kann das jeweilige Peripheriemodul 1006p derart ausgestaltet sein, dass dieses die Funktionen des Selektierinformationsmodul 1006c übernimmt. Dies kann beispielsweise hilfreich sein, wenn am Ende des Transportwegs (anschaulich an einer äußeren Aufnahmeposition der Modulaufnahme 1004) ein Ausschleusemodul 1006a mit einer Ausschleuseklappe 1006a-1 angeordnet werden soll, wie beispielsweise in Fig.1 1F in einer weiteren Konfiguration 1100f dargestellt ist. In diesem Fall können beispielsweise zwei Peripheriemodule 1006p verwendet werden, wobei ein Peripheriemodul 1006p derart ausgestaltet ist, dass dieses die Funktion des Selektierinformationsmoduls 1006c, wie vorangehend beschrieben ist, übernimmt. Dabei kann das Peripheriemodul 1006p, welches die Funktion des Selektierinformationsmoduls 1006c übernimmt, in der für das Selektierinformationsmodul 1006c vorgesehenen Aufnahmeposition 1004p angeordnet sein.

Gemäß verschiedenen Ausführungsformen kann das jeweilige Peripheriemodul 1006p eine Beleuchtung aufweisen, welche derart ausgestaltet sein kann, dass ein Betriebsmodus der Funktionsmodulanordnung 1002 oder der Kompaktoranordnung 202 angezeigt werden kann, zum Beispiel farbkodiert.

Gemäß verschiedenen Ausführungsformen kann die Funktionsmodulanordnung 1002 ein Anzeigemodul 1006d aufweisen. Das Anzeigemodul 1006d kann beispielsweise mittig in der Modulaufnahme 1004 angeordnet sein oder werden, z.B. unabhängig von den verschiedenen Konfigurationen 1100c bis 1100f der Funktionsmodulanordnung 1002.

Gemäß verschiedenen Ausführungsformen kann das Anzeigemodul 1006d ein Display (z.B. ein TFT-Display, etc.) oder zumindest ein oder mehrere beleuchtete Felder aufweisen zum Anzeigen eines Systemstatus eines einzelnen Funktionsmoduls 1006 der Funktionsmodulanordnung 1002 und/oder eines Systemstatus der gesamten Funktionsmodulanordnung 1002.

Anstelle des Anzeigemoduls 1006d kann alternativ ein Peripheriemodul 1006p in der Modulaufnahme 1004 aufgenommen sein oder werden. Dabei kann, gemäß verschiedenen Ausführungsformen, die gleiche elektrische Schnittstelle unabhängig vom Typ des aufgenommenen Funktionsmoduls 1006 verwendet werden.

Fig.11E veranschaulicht eine Funktionsmodulanordnung 1002 in einer weiteren Konfiguration 1 100e, z.B. als Alternative zu der in Fig.11C dargestellten Konfiguration 1100c bzw. in analoger Weise als Alternative zu der in Fig.11D dargestellten Konfiguration 1100d.

Gemäß verschiedenen Ausführungsformen kann die Funktionsmodulanordnung 1002 ein Schutzmodul 1006n aufweisen. Das Schutzmodul 1006n kann, gemäß verschiedenen Ausführungsformen, anstelle eines Selektiermoduls 1006s in der Modulaufnahme 1004 aufgenommen sein oder werden. Anschaulich kann das Schutzmodul 1006n ein Dummy-Modul sein als Platzhalter für ein entnommenes Selektiermodul 1006s.

Gemäß verschiedenen Ausführungsformen kann das Schutzmodul 1006n derart eingerichtet sein, dass dieses einen Zugang zu einem Kompaktor 102 der Kompaktoranordnung 202 (z.B. zu dessen Schneidwerk) blockiert. Somit kann beispielsweise ein versehentlicher Eingriff in das Schneidwerk eines Kompaktors 102 der Kompaktoranordnung 202 verhindert werden, wenn beispielsweise das Selektiermodul 1006s nicht in der Modulaufnahme 1004 aufgenommen ist. Ferner kann das Schutzmodul 1006n derart eingerichtet sein, dass dieses einen Transportbereich oberhalb der Leergut-Transportvorrichtung 202t (z.B. seitlich) begrenzt. Dazu kann das Schutzmodul 1006n beispielsweise eine Schutzplatte 1006n-1 aufweisen, welche im Wesentlichen die gleiche Position einnimmt, wie die schwenkbar gelagerte Klappe 1006s-1 des Selektiermoduls 1006s, wenn diese nicht über die Leergut-Transportvorrichtung 202t geschwenkt ist. Die Schutzplatte 1006n-1 kann beispielsweise starr montiert sein.

Gemäß verschiedenen Ausführungsformen kann das Schutzmodul 1006n eine Betriebsinformation 1006i bereitstellen, welche das Ansteuern bzw. das Betreiben eines Kompaktors 102 der Kompaktoranordnung 202 spezifiziert. Beispielsweise kann die von dem Schutzmodul 1006n bereitgestellte Betriebsinformation 1006i definieren, dass ein Betrieb des Kompaktors 102 (z.B. das rotieren des Schneidwerks des Kompaktors 102) blockiert sein soll, wenn (z.B. sobald und solange) das Schutzmodul 1006n in der Modulaufnahme 1004 aufgenommen ist.

Mittels der elektrischen Steckverbindung, wie vorangehend beschrieben ist, kann beispielsweise die Betriebsinformation 1006i des Schutzmoduls 1006n übermittelt werden (z.B. an den mindestens einen Prozessor 1008 oder an ein anderes der in der Modulaufnahme 1004 aufgenommenen Funktionsmodule 1006). Die Betriebsinformation 1006i kann dabei beispielsweise die Anwesenheit des Schutzmoduls 1006n sein bzw. repräsentieren.

Somit kann beispielsweise in dem Fall, dass der Kompaktor 102 der Kompaktoranordnung 202 einen Fremdkörper eingezogen hat, welcher einen Defekt am Schneidwerk verursacht hat, das Schneidwerk mittels des Einsetzens des Schutzmoduls 1006d in die Modulaufnahme 1004 abgeschaltet werden, so dass die Kompaktoranordnung 202 an sich weiterhin sicher im Durchlaufbetrieb betrieben werden kann.

Gemäß verschiedenen Ausführungsformen kann die Funktionsmodulanordnung 1002 derart eingerichtet sein, dass die Anwesenheit des Schutzmoduls 1006n signalisiert wird, z.B. mittels des Anzeigemoduls 1006d, etc. Ferner kann eine Nachricht an Wartungspersonal ausgelöst werden, wenn das Schutzmodul 1006n in die Modulaufnahme 1004 eingebracht wird.

Betriebszustand der Funktionsmodulanordnung 1002 bei Anwesenheit des Schutzmoduls 1006n kann beispielsweise durch das Schutzmodul 1006n selbst angezeigt werden. Dazu kann das Schutzmodul 1006n auf der Schutzplatte 1006n-1 ein Leuchtelement 1006n-2 aufweisen.

Gemäß verschiedenen Ausführungsformen kann ein in der Modulaufnahme 1004 aufgenommenes Funktionsmodul 1006, können mehrere oder alle in der Modulaufnahme 1004 aufgenommenen Funktionsmodule 1006 mittels einer Schnittstelle (z.B. einer elektrischen Steckverbindung, wie vorangehend beschrieben ist) mit einer Steuerelektronik (z.B. aufweisend den mindestens einen Prozessor 1008 oder implementiert in den mindestens einen Prozessor 1008) verbunden sein oder werden, welche beispielsweise in einem Elektrokasten angeordnet sein kann oder werden kann.

**Fig.12** veranschaulicht ein schematisches Ablaufdiagramm eines Verfahrens 1200 zum Betreiben einer Kompaktoranordnung 202, gemäß der Erfindung. Das Verfahren 1200 kann beispielsweise aufweisen: in 1210, Transportieren von Leergut 104 mittels einer Leergut-Transportvorrichtung 202t in der Kompaktoranordnung 202; in 1220, Konfigurieren einer Funktionsmodulanordnung 1002, welche oberhalb der Leergut-Transportvorrichtung 202t montiert ist, mittels Einbringens mehrerer Funktionsmodule 1006 in eine Modulaufnahme 1004 der Funktionsmodulanordnung 1002; in 1230, Ermitteln einer Ist-Konfiguration der Funktionsmodulanordnung 1002 basierend auf den mehreren Funktionsmodulen 1006, die in der Modulaufnahme 1004 aufgenommen sind; und, in 1240, Betreiben der Funktionsmodulanordnung 1002 in einem Betriebsmodus, welcher der Ist-Konfiguration zugeordnet ist.

Ferner kann das Verfahren 1200 aufweisen: Ändern der Ist-Konfiguration der Funktionsmodulanordnung 1002 mittels Austauschens mindestens eines der mehreren Funktionsmodule 1006 gegen mindestens ein weiteres Funktionsmodul unterschiedlichen Typs; und Ermitteln der geänderten Ist-Konfiguration der Funktionsmodulanordnung 1002 basierend auf den mehreren Funktionsmodulen 1006, die in der Modulaufnahme 1004 aufgenommen sind.

Ferner kann das Verfahren derart eingerichtet sein, wie es in Bezug auf die Kompaktoranordnung 202 sowie deren Funktionsweise hierin beschrieben ist.

Gemäß verschiedenen Ausführungsformen kann ein Funktionsmodul 1006 der Funktionsmodulanordnung 1002 oder können mehrere oder alle Funktionsmodule 1006 der Funktionsmodulanordnung 1002 basierend auf einer Betriebsinformation 1006i identifiziert werden. Anschaulich kann beispielsweise der jeweilige Typ des verwendeten Funktionsmoduls 1006 (anschaulich dessen Funktion) basierend auf der Betriebsinformation 1006i ermittelt werden. Basierend darauf kann ein entsprechender Betriebsmodus für die Funktionsmodulanordnung 1002 gewählt werden bzw. kann die Funktionsmodulanordnung 1002 in dem entsprechenden Betriebsmodus betrieben werden.

Die Betriebsinformation 1006i kann in jeder Form bereitgestellt sein oder werden, anhand derer die Funktionsmodule 1006 identifiziert werden können. Gemäß verschiedenen Ausführungsformen kann die Betriebsinformation 1006i derart bereitgestellt sein oder werden, dass die jeweilige Funktion bzw. der jeweilige Typ der Funktionsmodule 1006 eindeutig identifiziert werden kann.

Gemäß verschiedenen Ausführungsformen kann die Betriebsinformation 1006i ein Pointer sein, welcher auf eine zugeordnete Tabelle verweist, in welcher die Betriebsinformation 1006i gespeichert sind.

Gemäß verschiedenen Ausführungsformen kann die Betriebsinformation 1006i mittels einer entsprechend eingerichteten elektronischen Schaltung (z.B. einer Steuerschaltung) in dem jeweiligen Funktionsmodul 1006 implementiert sein. Dabei kann die Funktionsmodulanordnung 1002 derart eingerichtet sein, dass diese basierend auf der Steuerschaltung eines in der Modulaufnahme 1004 aufgenommenen Funktionsmoduls 1006 betrieben wird.

Gemäß verschiedenen Ausführungsformen können die jeweiligen Funktionen, die hierin beschrieben sind (z.B. mit Bezug auf den mindestens einen Prozessor 1008) in Hardware, z.B. in jeder geeigneten elektronischen Schaltung, und/oder in Software, z.B. auf einem Datenträger gespeichert (z.B. als Steuerprogramm) und ausgeführt von mindestens einem Prozessor, implementier sein.

## Patentansprüche

1. Kompaktoranordnung (202), aufweisend:
• ein Tragegestell (204a) zum Tragen eines Kompaktors (102);
• eine Leergut-Transportvorrichtung (202t) zum Transportieren von Leergut (104) in der Kompaktoranordnung (202);
• eine Funktionsmodulanordnung (1002), welche an dem Tragegestell (204a) oberhalb der Leergut-Transportvorrichtung (202t) montiert ist, wobei die Funktionsmodulanordnung (1002) aufweist:
eine Modulaufnahme (1004) zum Aufnehmen von mehreren Funktionsmodulen (1006),
die mehreren Funktionsmodule (1006), welche passend zu der Modulaufnahme (1004) ausgestaltet sind derart, dass die mehreren Funktionsmodule (1006) jeweils wahlweise in mehreren Konfigurationen (1100c, 1100d, 1100e, 1100f) in der Modulaufnahme (1004) aufgenommen werden können; und
• mindestens einen Prozessor (1008), welcher eingerichtet ist,
eine Ist-Konfigurationen der mehreren Konfigurationen (1100c, 1100d, 1100e, 1100f) zu ermitteln; und
• die Funktionsmodulanordnung (1002) und/oder die Kompaktoranordnung (202)
basierend auf der ermittelten Ist-Konfiguration zu betreiben,**dadurch gekennzeichnet, dass** die Modulaufnahme (1004) eine oder mehrere elektrische Schnittstellen aufweist zum Versorgen der jeweils in der Modulaufnahme (1004) aufgenommenen Funktionsmodule (1006) und/oder zum Kommunizieren mit den jeweiligen in der Modulaufnahme (1004) aufgenommenen Funktionsmodulen (1006).

2. Kompaktoranordnung (202) gemäß Anspruch 1,
wobei jedem Funktionsmodul der mehreren Funktionsmodule (1006) gemäß dessen Funktion eine Betriebsinformation (1006i) zugeordnet ist; und
wobei der mindestens eine Prozessor (1008) eingerichtet ist, die Ist-Konfigurationen basierend auf mindestens einer Betriebsinformation (1006i) von mindestens einem in der Modulaufnahme (1004) aufgenommen Funktionsmodul zu ermitteln.

3. Kompaktoranordnung (202) gemäß Anspruch 2,
wobei das mindestens eine Funktionsmodul einen Datenspeicher oder eine Identifizierungsstruktur zum Bereitstellen der Betriebsinformation (1006i) aufweist.

4. Kompaktoranordnung (202) gemäß einem der Ansprüche 1 bis 3,
wobei die mehreren Funktionsmodule (1006) ein Selektiermodul (1006s) aufweisen, und
wobei der mindestens eine Prozessor (1008) eingerichtet ist, das Selektiermodul (1006s), wenn dieses in der Modulaufnahme (1004) aufgenommen ist, derart anzusteuern, dass Leergut (104), welches mittels der Leergut-Transportvorrichtung (202t) transportiert wird, einem Kompaktor (102) der Kompaktoranordnung (202) mittels des Selektiermoduls (1006s) selektiv zugeführt werden kann.

5. Kompaktoranordnung (202) gemäß Anspruch 4,
wobei das Selektiermodul (1006s) als ein Selektiermodul eines ersten Selektiermodultyps oder eines zweiten Selektiermodultyps bereitgestellt ist, wobei der mindestens eine Prozessor (1008) ferner derart eingerichtet ist die Leergut-Transportvorrichtung (202t) derart anzusteuern,
dass die Leergut-Transportvorrichtung (202t) in eine erste Transportrichtung bewegt wird, wenn ein Selektiermodul des ersten Selektiermodul-Typs in der Modulaufnahme (1004) aufgenommen ist, und
dass die Leergut-Transportvorrichtung (202t) in eine zweite Transportrichtung, welche verschieden von der ersten Transportrichtung ist, bewegt wird, wenn ein Selektiermodul des zweiten Selektiermodul-Typs in der Modulaufnahme (1004) aufgenommen ist.

6. Kompaktoranordnung (202) gemäß Anspruch 4 oder 5,
wobei die mehreren Funktionsmodule (1006) ein Schutzmodul (1006n) aufweisen, und
wobei der mindestens eine Prozessor (1008) eingerichtet ist, den Kompaktor (102) der Kompaktoranordnung (202) zu deaktivieren, wenn das Schutzmodul (1006n) in der Modulaufnahme (1004) aufgenommen ist.

7. Kompaktoranordnung (202) gemäß Anspruch 6,
wobei die Modulaufnahme (1004) eine erste Aufnahmeposition (1004p) aufweist derart, dass wahlweise entweder ein Selektiermodul (1006s) oder ein Schutzmodul (1006n) in der ersten Aufnahmeposition (1004p) aufgenommen werden kann.

8. Kompaktoranordnung (202) gemäß einem der Ansprüche 4 bis 7,
wobei die mehreren Funktionsmodule (1006) ferner ein Selektierinformationsmodul (1006c) aufweisen, und
wobei der mindestens eine Prozessor (1008) eingerichtet ist, das Selektiermodul (1006s) basierend auf einer von dem Selektierinformationsmodul (1006c) ermittelten Selektierinformation anzusteuern, wenn das Selektiermodul (1006s) und das Selektierinformationsmodul (1006c) in der Modulaufnahme (1004) aufgenommen sind.

9. Kompaktoranordnung (202) gemäß Anspruch 8,
wobei die Modulaufnahme (1004) zwei erste Aufnahmepositionen (1004p) aufweist derart, dass in jede der zwei ersten Aufnahmepositionen (1004p) wahlweise entweder ein Selektiermodul (1006s), ein Schutzmodul (1006n) oder ein Selektierinformationsmodul (1006c) aufgenommen werden kann.

10. Kompaktoranordnung (202) gemäß einem der Ansprüche 4 bis 9,
wobei die mehreren Funktionsmodule (1006) ferner mindestens ein Peripheriemodul (1006p) mit mindestens einem Sensor aufweisen, und
wobei der mindestens eine Prozessor (1008) eingerichtet ist, das Selektiermodul (1006s) basierend auf von dem Sensor ermittelten Sensorinformationen anzusteuern, wenn das Selektiermodul (1006s) und das mindestens eine Peripheriemodul (1006p) in der Modulaufnahme (1004) aufgenommen sind.

11. Kompaktoranordnung (202) gemäß Anspruch 10,
wobei die Modulaufnahme (1004) zwei zweite Aufnahmepositionen (1004p) aufweist derart, dass das mindestens eine Peripheriemodul (1006p) in jeder der zwei zweiten Aufnahmepositionen (1004p) aufgenommen werden kann.

12. Kompaktoranordnung (202) gemäß einem der Ansprüche 1 bis 11,
wobei die mehreren Funktionsmodule (1006) ferner ein Anzeigemodul (1006d) aufweisen, und
wobei der mindestens eine Prozessor (1008) eingerichtet ist, mindestens einen Betriebszustand der Funktionsmodulanordnung (1002) mittels des Anzeigemoduls (1006d) anzuzeigen, wenn das Anzeigemodul (1006d) in der Modulaufnahme (1004) aufgenommen ist.

13. Kompaktoranordnung (202) gemäß Anspruch 12,
wobei die Modulaufnahme (1004) eine dritte Aufnahmeposition (1004p) aufweist derart, dass das Anzeigemodul (1006d) in der dritten Aufnahmeposition (1004p) aufgenommen werden kann.

14. Kompaktoreinrichtung (300), aufweisend:
mehrere Kompaktoranordnungen (202) gemäß einem der Ansprüche 1 bis 13,
wobei die Kompaktoranordnungen (202) derart relativ zueinander angeordnet sind, dass Leergut (104) entlang eines Transportwegs durch die Kompaktoranordnungen (202) hindurch transportiert werden kann.

15. Verfahren (1200) zum Betreiben einer Kompaktoranordnung (202), das Verfahren (1200) aufweisend:
• Transportieren von Leergut (104) mittels einer Leergut-Transportvorrichtung (202t) in der Kompaktoranordnung (202),
• Konfigurieren einer Funktionsmodulanordnung (1002), welche oberhalb der Leergut-Transportvorrichtung (202t) montiert ist, mittels Einbringens mehrerer Funktionsmodule (1006) in eine Modulaufnahme (1004) der Funktionsmodulanordnung (1002);
• Ermitteln einer Ist-Konfiguration der Funktionsmodulanordnung (1002) basierend auf den mehreren Funktionsmodulen (1006), die in der Modulaufnahme (1004) aufgenommen sind; und
• Betreiben der Funktionsmodulanordnung (1002) basierend auf der ermittelten Ist-Konfiguration;
• **dadurch gekennzeichnet, dass**
die Modulaufnahme (1004) eine oder mehrere elektrische Schnittstellen aufweist zum Versorgen der jeweils in der Modulaufnahme (1004) aufgenommenen Funktionsmodule (1006) und/oder zum Kommunizieren mit den jeweiligen in der Modulaufnahme (1004) aufgenommenen Funktionsmodulen (1006).

## Claims

1. Compactor arrangement (202), having:
• a supporting frame (204a) for supporting a compactor (102);
• an empty-container transport device (202t) for transporting empty containers (104) in the compactor arrangement (202);
• a function module arrangement (1002) which is installed on the supporting frame (204a) above the empty-container transport device (202t), wherein the function module arrangement (1002) has:
a module receptacle (1004) for receiving multiple function modules (1006),
the multiple function modules (1006), which are designed to match the module receptacle (1004) such that the multiple function modules (1006) can each be selectively received in multiple configurations (1100c, 1100d, 1100e, 1100f) in the module receptacle (1004); and
• at least one processor (1008), which is configured
to determine an actual configuration of the multiple configurations (1100c, 1100d, 1100e, 1100f); and
• to operate the function module arrangement (1002) and/or the compactor arrangement (202) on the basis of the determined actual configuration, **characterized in that** the module receptacle (1004) has one or more electrical interfaces for supply to the function module (1006) respectively received in the module receptacle (1004) and/or for communication with the respective function modules (1006) received in the module receptacle (1004) .

2. Compactor arrangement (202) according to Claim 1,
wherein each function module of the multiple function modules (1006) is assigned an item of operating information (1006i) in accordance with the function thereof; and
wherein the at least one processor (1008) is configured to determine the actual configuration on the basis of at least one item of operating information (1006i) of at least one function module received in the module receptacle (1004).

3. Compactor arrangement (202) according to Claim 2, wherein the at least one function module has a data memory or an identification structure for providing the item of operating information (1006i).

4. Compactor arrangement (202) according to any one of Claims 1 to 3, wherein the multiple function modules (1006) have a selection module (1006s), and wherein the at least one processor (1008) is configured to control the selection module (1006s), when this is received in the module receptacle (1004), such that empty containers (104) transported by means of the empty-container transport device (202t) can be selectively supplied to a compactor (102) of the compactor arrangement (202) by means of the selection module (1006s).

5. Compactor arrangement (202) according to Claim 4, wherein the selection module (1006s) is provided as a selection module of a first selection module type or of a second selection module type,
wherein the at least one processor (1008) is furthermore configured to control the empty-container transport device (202t) in such a way that the empty-container transport device (202t) is moved in a first transport direction when a selection module of the first selection module type is received in the module receptacle (1004) and that the empty-container transport device (202t) is moved in a second transport direction, which differs from the first transport direction, when a selection module of the second selection module type is received in the module receptacle (1004).

6. Compactor arrangement (202) according to Claim 4 or 5, wherein the multiple function modules (1006) have a protective module (1006n), and
wherein the at least one processor (1008) is configured to deactivate the compactor (102) of the compactor arrangement (202) when the protective module (1006n) is received in the module receptacle (1004).

7. Compactor arrangement (202) according to Claim 6, wherein the module receptacle (1004) has a first receiving position (1004p) such that selectively either a selection module (1006s) or a protective module (1006n) can be received in the first receiving position (1004p).

8. Compactor arrangement (202) according to any one of Claims 4 to 7,
wherein the multiple function modules (1006) furthermore have a selection information module (1006c), and
wherein the at least one processor (1008) is configured to control the selection module (1006s) on the basis of an item of selection information, which is determined by the selection information module (1006c), when the selection module (1006s) and the selection information module (1006c) are received in the module receptacle (1004).

9. Compactor arrangement (202) according to Claim 8, wherein the module receptacle (1004) has two first receiving positions (1004p) such that selectively either a selection module (1006s), a protective module (1006n) or a selection information module (1006c) can be received in each of the two first receiving positions (1004p).

10. Compactor arrangement (202) according to any one of Claims 4 to 9,
wherein the multiple function modules (1006) furthermore have at least one peripheral module (1006p) with at least one sensor, and
wherein the at least one processor (1008) is configured to control the selection module (1006s) on the basis of sensor information items, which are determined by the sensor, when the selection module (1006s) and the at least one peripheral module (1006p) are received in the module receptacle (1004) .

11. Compactor arrangement (202) according to Claim 10,
wherein the module receptacle (1004) has two second receiving positions (1004p) such that the at least one peripheral module (1006p) can be received in each of the two second receiving positions (1004p).

12. Compactor arrangement (202) according to any one of Claims 1 to 11,
wherein the multiple function modules (1006) furthermore have a display module (1006d), and wherein the at least one processor (1008) is configured to display at least one operating state of the function module arrangement (1002) by means of the display module (1006d) when the display module (1006d) is received in the module receptacle (1004).

13. Compactor arrangement (202) according to Claim 12, wherein the module receptacle (1004) has a third receiving position (1004p) such that the display module (1006d) can be received in the third receiving position (1004p).

14. Compactor means (300), having:
multiple compactor arrangements (202) according to any one of Claims 1 to 13,
wherein the compactor arrangements (202) are arranged relative to one another such that empty containers (104) can be transported along a transport path through the compactor arrangements (202) .

15. Method (1200) for operating a compactor arrangement (202), the method (1200) comprising:
• transporting empty containers (104) by means of an empty-container transport device (202t) in the compactor arrangement (202),
• configuring a function module arrangement (1002), which is installed above the empty-container transport device (202t), by introduction of multiple function modules (1006) into a module receptacle (1004) of the function module arrangement (1002);
• determining an actual configuration of the function module arrangement (1002) on the basis of the multiple function modules (1006) that are received in the module receptacle (1004); and
• operating the function module arrangement (1002) on the basis of the determined actual configuration;
• **characterized in that**
the module receptacle (1004) has one or more electrical interfaces for supply to the function module (1006) respectively received in the module receptacle (1004) and/or for communication with the respective function modules (1006) received in the module receptacle (1004).

## Revendications

1. Ensemble à compacteur (202), comportant :
• un cadre de support (204a) destiné à supporter un compacteur (102) ;
• un dispositif de transport d'emballages vides (202t) destiné à transporter des emballages vides (104) dans l'ensemble à compacteur (202) ;
• un ensemble à modules fonctionnels (1002) qui est monté sur le cadre de support (204a) au-dessus du dispositif de transport d'emballages vides (202t), l'ensemble à modules fonctionnels (1002) comportant :
un logement de modules (1004) destiné à loger une pluralité de modules fonctionnels (1006),
la pluralité de modules fonctionnels (1006) qui sont conçus pour s'adapter au logement de modules (1004) de telle sorte que la pluralité de modules fonctionnels (1006) peuvent chacun éventuellement être logés dans le logement de modules (1004) suivant une pluralité de configurations (1100c, 1100d, 1100e, 1100f) ; et
• au moins un processeur (1008) qui est conçu pour déterminer une configuration réelle de la pluralité de configurations (1100c, 1100d, 1100e, 1100f) ; et
• pour faire fonctionner l'ensemble à modules fonctionnels (1002) et/ou l'ensemble à compacteur (202) en fonction de la configuration réelle déterminée, **caractérisé en ce que** le logement de modules (1004) comporte une ou plusieurs interfaces électriques destinées à alimenter les modules fonctionnels (1006) logés chacun dans le logement de modules (1004) et/ou à communiquer avec les modules fonctionnels respectifs (1006) logés dans le logement de modules (1004).

2. Ensemble à compacteur (202) selon la revendication 1,
une information de fonctionnement (1006i) étant associée à chaque module fonctionnel de la pluralité de modules fonctionnels (1006) selon sa fonction ; et
l'au moins un processeur (1008) étant conçu pour déterminer les configurations réelles sur la base d'au moins une information de fonctionnement (1006i) provenant d'au moins un module fonctionnel logé dans le logement de modules (1004).

3. Ensemble à compacteur (202) selon la revendication 2,
l'au moins un module fonctionnel comportant une mémoire de données ou une structure d'identification destinée à fournir l'information de fonctionnement (1006i) .

4. Ensemble à compacteur (202) selon l'une des revendications 1 à 3,
la pluralité de modules fonctionnels (1006) comportant un module de sélection (1006s), et
l'au moins un processeur (1008) étant conçu pour commander le module de sélection (1006s) lorsque celui-ci est logé dans le logement de modules (1004) de telle sorte que des emballages vides (104), qui sont transportés au moyen du dispositif de transport d'emballages vides (202t), peuvent être amenés sélectivement à un compacteur (102) de l'ensemble à compacteur (202) au moyen du module de sélection (1006s) .

5. Ensemble à compacteur (202) selon la revendication 4,
le module de sélection (1006s) étant prévu comme module de sélection d'un premier type de module de sélection ou d'un deuxième type de module de sélection,
l'au moins un processeur (1008) étant en outre conçu pour commander le dispositif de transport d'emballages vides (202t) de telle sorte que le dispositif de transport d'emballage vides (202t) soit déplacé dans une première direction de transport lorsqu'un module de sélection du premier module de sélection type est logé dans le logement de modules (1004), et de telle sorte que le dispositif de transport d'emballages vides (202t) soit déplacé dans une deuxième direction de transport, qui est différente de la première direction de transport, lorsqu'un module de sélection du deuxième type de module de sélection est logé dans le logement de modules (1004).

6. Ensemble à compacteur (202) selon la revendication 4 ou 5, la pluralité de modules fonctionnels (1006) comportant un module de protection (1006n), et l'au moins un processeur (1008) étant conçu pour désactiver le compacteur (102) de l'ensemble à compacteur (202) lorsque le module de protection (1006n) est logé dans le logement de modules (1004).

7. Ensemble à compacteur (202) selon la revendication 6,
le logement de modules (1004) comportant une première position de logement (1004p) de sorte qu'un module de sélection (1006s) ou un module de protection (1006n) puisse être logé dans la première position de logement (1004p).

8. Ensemble à compacteur (202) selon l'une des revendications 4 à 7,
la pluralité de modules fonctionnels (1006) comprenant en outre un module d'information de sélection (1006c), et
l'au moins un processeur (1008) étant conçu pour commander le module de sélection (1006s) sur la base d'une information de sélection déterminée par le module d'information de sélection (1006c) lorsque le module de sélection (1006s) et le module d'information de sélection (1006c) sont logés dans le logement de modules (1004).

9. Ensemble à compacteur (202) selon la revendication 8,
le logement de modules (1004) comportant deux premières positions de logement (1004p) de sorte qu'un module de sélection (1006s), un module de protection (1006n) ou un module d'information de sélection (1006c) puisse être logé dans chacune des deux premières positions de logement (1004p).

10. Ensemble à compacteur (202) selon l'une des revendications 4 à 9,
la pluralité de modules fonctionnels (1006) comportant en outre au moins un module périphérique (1006p) pourvu d'au moins un capteur, et
l'au moins un processeur (1008) étant conçu pour commander le module de sélection (1006s) sur la base d'informations de capteur déterminées par le capteur lorsque le module de sélection (1006s) et l'au moins un module périphérique (1006p) sont logés dans le logement de modules (1004).

11. Ensemble à compacteur (202) selon la revendication 10,
le logement de modules (1004) comportant deux deuxièmes positions de logement (1004p) de sorte que l'au moins un module périphérique (1006p) puisse être logé dans chacune des deux deuxièmes positions de logement (1004p).

12. Ensemble à compacteur (202) selon l'une des revendications 1 à 11,
la pluralité de modules fonctionnels (1006) comportant en outre un module d'affichage (1006d), et
l'au moins un processeur (1008) étant conçu pour afficher au moins un état de fonctionnement de l'ensemble à modules fonctionnels (1002) au moyen du module d'affichage (1006d) lorsque le module d'affichage (1006d) est logé dans le logement de modules (1004).

13. Ensemble à compacteur (202) selon la revendication 12,
le logement de modules (1004) comportant une troisième position de logement (1004p) de sorte que le module d'affichage (1006d) puisse être logé dans la troisième position de logement (1004p).

14. Unité de compactage (300), comprenant :
une pluralité d'ensembles à compacteur (202) selon l'une des revendications 1 à 13,
les ensembles à compacteur (202) étant disposés les uns par rapport aux autres de sorte que les emballages vides (104) puissent être transportés le long d'un chemin de transport s'étendant à travers les ensembles à compacteur (202).

15. Procédé (1200) de fonctionnement d'un ensemble à compacteur (202), le procédé (1200) comportant les opérations suivantes :
• transporter des emballages vides (104) au moyen d'un dispositif de transport d'emballages vides (202t) dans l'ensemble à compacteur (202),
• configurer un ensemble à modules fonctionnels (1002), qui est monté au-dessus du dispositif de transport d'emballages vides (202t), par introduction d'une pluralité de modules fonctionnels (1006) dans un logement de modules (1004) de l'ensemble à modules fonctionnels (1002) ;
• déterminer une configuration réelle de l'ensemble à modules fonctionnels (1002) sur la base de la pluralité de modules fonctionnels (1006) qui sont logés dans le logement de modules (1004) ; et
• faire fonctionner l'ensemble à modules fonctionnels (1002) sur la base de la configuration réelle déterminée ;
• **caractérisé en ce que**
le logement de modules (1004) comporte une ou plusieurs interfaces électriques destinées à alimenter les modules fonctionnels (1006) logés dans le logement de modules (1004) et/ou à communiquer avec les modules fonctionnels respectifs (1006) logés dans le logement de modules (1004).
